# EUROPEAN PATENT APPLICATION

(11) **EP 4 730 818 A1**
(43) Date of publication of application: **22.04.2026**
(21) Application number: 24860150.2
(22) Date of filing: 04.07.2024
(51) Int. Cl.: H04N 21/44, H04N 21/43, H04N 21/218, H04N 21/8547, G06V 20/40

(54) **ELECTRONIC DEVICE, METHOD, AND NON-TRANSITORY COMPUTER-READABLE RECORDING MEDIUM FOR GENERATING OR REPRODUCING VIDEO DATA INCLUDING MULTI-SOURCE IMAGES IN ONE TRACK**

(30) Priority: 02.09.2023 KR 20230116565; 24.10.2023 KR 20230143356
(71) Applicant: Samsung Electronics Co., Ltd., Suwon-si, Gyeonggi-do 16677 (KR)
(72) Inventor: LIM, Jeongkyu, Suwon-si Gyeonggi-do 16677 (KR); LEE, Kyungil, Suwon-si Gyeonggi-do 16677 (KR); KIM, Bosung, Suwon-si Gyeonggi-do 16677 (KR); KIM, Hyunsoo, Suwon-si Gyeonggi-do 16677 (KR); PARK, Kyoungkeun, Suwon-si Gyeonggi-do 16677 (KR); AN, Gyushik, Suwon-si Gyeonggi-do 16677 (KR)
(74) Representative: HGF
(86) International application number: PCT/KR2024/009497
(87) International publication number: WO 2025/048227

(57) **Abstract**

An electronic device is disclosed. The electronic device may comprise a processor. The electronic device may comprise a memory for storing instructions. The instructions, when executed by the processor, may cause the electronic device to acquire a first image comprising first frames through a first camera. The instructions, when executed by the processor, may cause the electronic device to acquire a second image comprising second frames through a second camera. The instructions, when executed by the processor, may cause the electronic device to generate video data including a first image and a second image in a single video track.

## Description

### [Technical Field]

The following descriptions relate to an electronic device, a method, and a non-transitory computer readable storage medium that generate or play video data including multi-source videos in one track.

### [Background Art]

An electronic device may include two or more cameras. The electronic device may obtain videos via the two or more cameras. The electronic device may generate video data including the videos on different tracks.

The above-described information may be provided as a related art for a purpose of helping understanding of the present disclosure. No claim or determination is raised as to whether any of the above-described descriptions may be applied as a prior art related to the present disclosure.

### [Disclosure]

### [Technical Solution]

An electronic device is disclosed. The electronic device may include a processor. The electronic device may include memory storing instructions. The instructions, when executed by the processor, may cause the electronic device to obtain, via a first camera, a first video including first frames. The instructions, when executed by the processor, may cause the electronic device to obtain, via a second camera, a second video including second frames. The instructions, when executed by the processor, may cause the electronic device to generate video data including the first video and the second video on a single video track.

A non-transitory computer readable storage medium is disclosed. The non-transitory computer readable storage medium may store a program including instructions. The instructions may be configured, when executed by a processor of an electronic device, to cause the electronic device to obtain, via a first camera, a first video including first frames. The instructions may be configured, when executed by the processor of the electronic device, to cause the electronic device to obtain, via a second camera, a second video including second frames. The instructions may be configured, when executed by the processor of the electronic device, to cause the electronic device to generate video data including the first video and the second video on a single video track.

A method is disclosed. The method may be performed by an electronic device. The method may include obtaining, via a first camera, a first video including first frames. The method may include obtaining, via a second camera, a second video including second frames. The method may include generating video data including the first video and the second video on a single video track.

An electronic device is disclosed. The electronic device may include a display. The electronic device may include a processor. The electronic device may include memory storing instructions. The instructions, when executed by the processor, may cause the electronic device to obtain video data as a single video track including a first video and a second video on the single video track. The instructions, when executed by the processor, may cause the electronic device to play first frames of the first video according to timestamp numbers. The instructions, when executed by the processor, may cause the electronic device to, in a case that an input event for changing from the first frames to second frames of the second video is received during playing of the first frames, play the second frames according to the timestamp numbers.

A non-transitory computer readable storage medium is disclosed. The non-transitory computer readable storage medium may store a program including instructions. The instructions may be configured, when executed by a processor of an electronic device including a display, to cause the electronic device to obtain video data as a single video track including a first video and a second video on the single video track. The instructions may be configured, when executed by the processor, to cause the electronic device to play first frames of the first video according to timestamp numbers. The instructions may be configured, when executed by the processor, to cause the electronic device to, in a case that an input event for changing from the first frames to second frames of the second video is received during playing of the first frames, play the second frames according to the timestamp numbers.

A method is disclosed. The method may be performed by an electronic device including a display. The method may include obtaining video data as a single video track including a first video and a second video on the single video track. The method may include playing first frames of the first video according to timestamp numbers. The method may include, in a case that an input event for changing from the first frames to second frames of the second video is received during playing of the first frames, playing the second frames according to the timestamp numbers.

### [Description of the Drawings]

FIG. 1 is a block diagram of an electronic device in a network environment according to various embodiments.
FIG. 2A is a block diagram of electronic devices according to an embodiment.
FIG. 2B is a block diagram of programs for encoding a video, according to an embodiment.
FIG. 2C is a block diagram of programs for decoding a video, according to an embodiment.
FIG. 3A illustrates an example of frames included in videos obtained by an electronic device via cameras.
FIG. 3B illustrates an example of frames included in videos obtained by an electronic device via cameras.
FIG. 3C illustrates an example of an operation of disposing frames included in videos obtained by an electronic device via cameras into one track.
FIG. 4A illustrates an example of frames obtained via a plurality of cameras, according to an embodiment.
FIG. 4B illustrates an example of a structure in which frames of a plurality of videos are arranged on one track, according to an embodiment.
FIG. 4C illustrates an example of a structure in which frames of a plurality of videos are arranged on different tracks.
FIG. 5A illustrates an example of a structure of video data according to an embodiment.
FIG. 5B illustrates an example of an operation of specifying a position of a frame according to a structure of video data, according to an embodiment.
FIG. 6A illustrates an example of a decoding order of frames according to an event, according to an embodiment.
FIG. 6B illustrates an example of a decoding order of frames according to an event, according to an embodiment.
FIG. 6C illustrates an example of a decoding order of frames according to an event, according to an embodiment.
FIG. 6D illustrates an example of an operation of decoding with reference to a frame of another video, according to an embodiment.
FIG. 7A illustrates an example of a frame of video data played by an electronic device, according to an embodiment.
FIG. 7B illustrates an example of frames of video data played by an electronic device, according to an embodiment.
FIG. 7C illustrates an example of a frame of video data played by an electronic device, according to an embodiment.
FIG. 7D illustrates an example of frames of video data played by an electronic device, according to an embodiment.
FIG. 8A illustrates an example of frames obtained via a plurality of cameras, according to an embodiment.
FIG. 8B illustrates an example of an order of frames, according to an embodiment.
FIG. 9 illustrates an example of a plurality of cameras having different fields of view, according to an embodiment.
FIG. 10 is a flowchart indicating an operation of an electronic device according to an embodiment.
FIG. 11 is a flowchart indicating an operation of an electronic device according to an embodiment.
FIG. 12 is a flowchart indicating an operation of an electronic device according to an embodiment.

### [Mode for Invention]

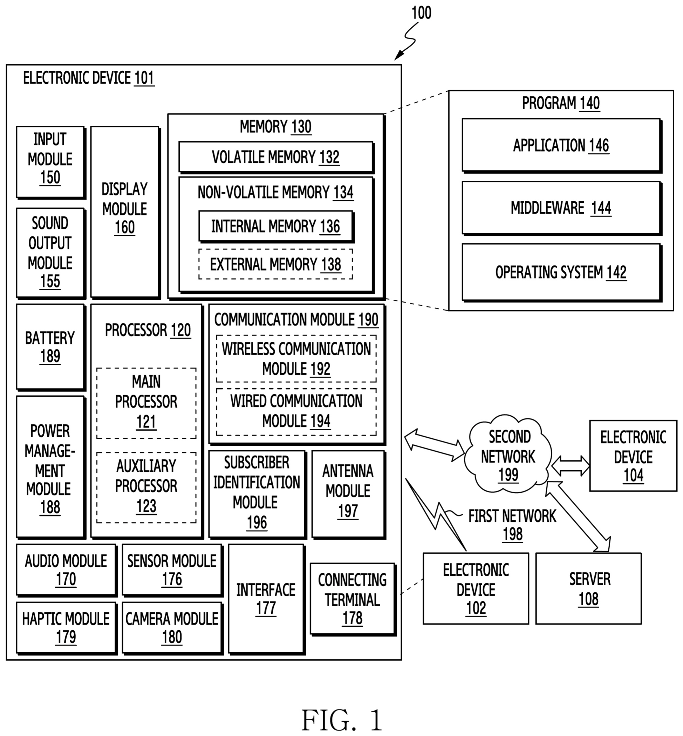

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

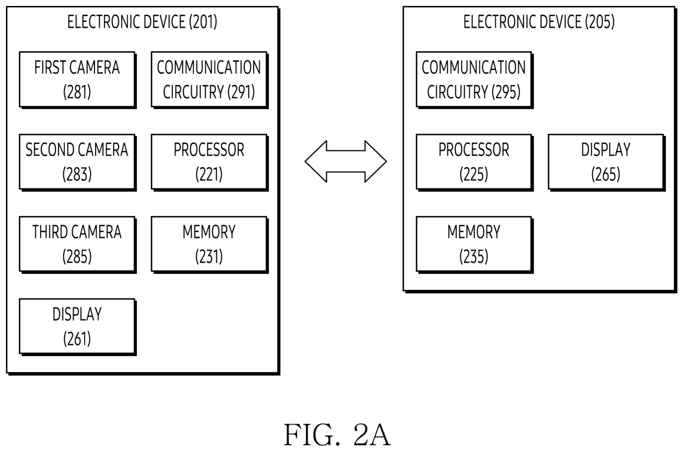

FIG. 2A is a block diagram of electronic devices 201 and 205 according to an embodiment.

Referring to FIG. 2A, an electronic device 201 may include a processor 221, memory 231, a display 261, cameras 281, 283, and 285, and/or communication circuitry 291. The processor 221 may correspond to the processor 120 of the electronic device 101 of FIG. 1. The memory 231 may correspond to the memory 130 of the electronic device 101 of FIG. 1. The display 261 may correspond to the display module 160 of the electronic device 101 of FIG. 1. The first camera 281 may correspond to the camera module 180 of the electronic device 101 of FIG. 1. The second camera 283 may correspond to the camera module 180 of the electronic device 101 of FIG. 1. The third camera 285 may correspond to the camera module 180 of the electronic device 101 of FIG. 1. The communication circuitry 291 may correspond to the communication module 190 of the electronic device 101 of FIG. 1. The electronic device 201 of FIG. 2A may further include at least some of the components of the electronic device 101 of FIG. 1. For example, the electronic device 201 may include an input module 150 and/or a sensor module 176 of the electronic device 101. However, it is not limited thereto.

In an embodiment, the cameras 281, 283, and 285 of the electronic device 201 may have different camera performances. For example, the cameras 281, 283, and 285 may have different lens properties. For example, the cameras 281, 283, and 285 may have different at least one of an angle of view (AOV) (or a focal length), a field of view (FOV), or an f number. For example, the first camera 281 may be a wide-angle camera among a fisheye (e.g., 180 degrees), an ultra-wide angle (e.g., 120 degrees), a wide angle (e.g., 85 degrees), a telephoto (e.g., 36 degrees), or an ultra-telephoto (e.g., 11 degrees). The second camera 283 may be a telephoto camera having an angle of view different from the first camera 281. The third camera 285 may be an ultra-wide angle camera having an angle of view different from those of the first camera 281 and the second camera 283. For example, the cameras 281, 283, and 285 may be disposed at different positions of the electronic device 201. For example, any one camera of the cameras 281, 283, and 285 may be disposed on a first surface of the electronic device 201, and another camera may be disposed on a second surface facing the first surface of the electronic device 201, such that the cameras 281, 283, and 285 have different fields of view. For example, the cameras 281, 283, and 285 may be disposed at different positions on the same surface of the electronic device 201 such that the cameras 281, 283, and 285 have the different fields of view. Hereinafter, it may be exemplified that the first camera 281 is the wide-angle camera, the second camera 283 is the telephoto camera, and the third camera 285 is the ultra-wide angle camera.

In FIG. 2A, the electronic device 201 is exemplified as having three cameras, but it is merely an example. According to an embodiment, the electronic device 201 may include two or four or more cameras.

In an embodiment, an electronic device 205 may include a processor 225, memory 235, a display 265, and/or communication circuitry 295. The processor 225 may correspond to the processor 120 of the electronic device 101 of FIG. 1. The memory 235 may correspond to the memory 130 of the electronic device 101 of FIG. 1. The display 265 may correspond to the display module 160 of the electronic device 101 of FIG. 1. The communication circuitry 295 may correspond to the communication module 190 of the electronic device 101 of FIG. 1. The electronic device 205 of FIG. 2A may further include at least some of the components of the electronic device 101 of FIG. 1. For example, the electronic device 205 may include the input module 150 and/or a sensor module 176 of the electronic device 101. However, it is not limited thereto.

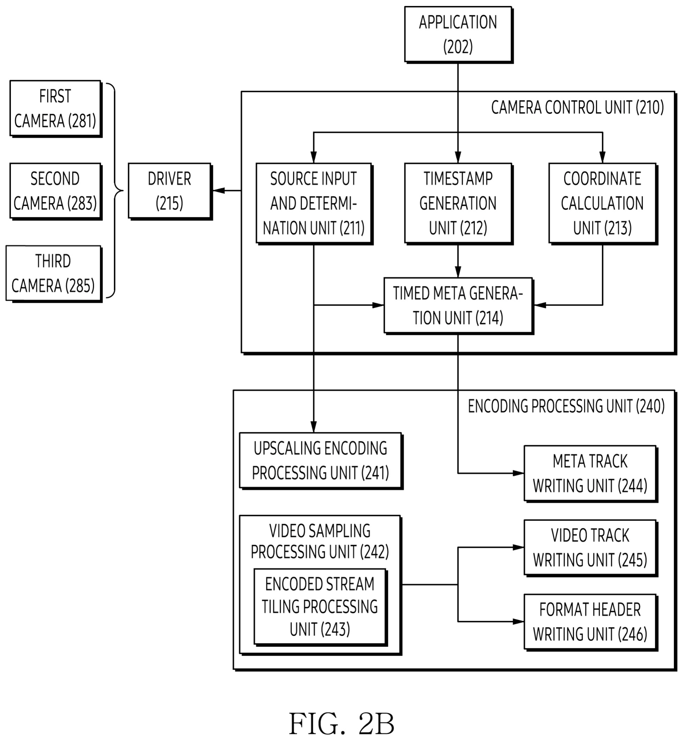

FIG. 2B is a block diagram of programs for encoding a video, according to an embodiment.

FIG. 2B may be described with reference to the components of FIGS. 1 and 2A.

The programs of FIG. 2B may be executed by at least one of the processors 221 and 225 of the electronic devices 201 and 205.

Referring to FIG. 2B, an application 202 may be a program capable of providing a function associated with a video. For example, the application 202 may provide a recording function of a video. For example, the application 202 may record a video through a camera control unit 210 and/or an encoding processing unit 240. In an embodiment, the application 202 may obtain an event. For example, the application 202 may obtain an input event of a user. For example, the application 202 may obtain a touch event, a keyboard event, and/or a mouse event through an input module 150.

In an embodiment, the camera control unit 210 may include a source input and determination unit 211, a timestamp generation unit 212, a coordinate calculation unit 213, and a timed meta generation unit 214.

In an embodiment, the source input and determination unit 211 may control capturing of videos via at least two cameras of a plurality of cameras 281, 283, and 285. In an embodiment, the timestamp generation unit 212 may generate a timestamp of frames included in videos captured via at least two cameras of the plurality of cameras 281, 283, and 285. In an embodiment, the coordinate calculation unit 213 may obtain information on a coordinate of an input of the user. In an embodiment, the timed meta generation unit 214 may generate timed metadata for the input of the user, obtained through an application 146. In an embodiment, the timed meta generation unit 214 may generate timed metadata for frames of videos obtained via at least two cameras of the plurality of different cameras 281, 283, and 285 having the same or corresponding timestamps.

In an embodiment, a driver 215 may control on/off of at least one camera of the plurality of cameras 281, 283, and 285 under the control of the camera control unit 210 (or the source input and determination unit 211). In an embodiment, the driver 215 may control a video capturing of at least one camera of the plurality of cameras 281, 283, and 285 under control of the camera control unit 210 (or the source input and determination unit 211). In an embodiment, the driver 215 may transmit videos captured via at least one camera of the plurality of cameras 281, 283, and 285 to the encoding processing unit 240. Herein, the videos transmitted from the driver 215 to the encoding processing unit 240 may be raw data.

In an embodiment, the encoding processing unit 240 may include an upscaling encoding processing unit 241, a video sampling processing unit 242, a meta track writing unit 244, a video track writing unit 245, and a format header writing unit 246. In an embodiment, the video sampling processing unit 242 may include an encoded stream tiling processing unit 243.

In an embodiment, the upscaling encoding processing unit 241 may encode source videos obtained via the plurality of cameras 281, 283, and 285. In an embodiment, the upscaling encoding processing unit 241 may encode some frames among frames included in the source videos. For example, the upscaling encoding processing unit 241 may encode a frame of a video referring to a frame of a video obtained from another camera. In an embodiment, in a case of videos that are streamed in real time, the upscaling encoding processing unit 241 may encode a frame according to a negotiation based on a capacity of a receiving device (e.g., an electronic device 205) and/or a designated rule (e.g., a designated rule between a transmitting device (e.g., the electronic device 201) and a receiving device) and may store the encoded frame.

In an embodiment, the video sampling processing unit 242 may encode source videos obtained via the plurality of cameras 281, 283, and 285. In an embodiment, the video sampling processing unit 242 may encode frames included in each of the source videos obtained via the plurality of cameras 281, 283, and 285.

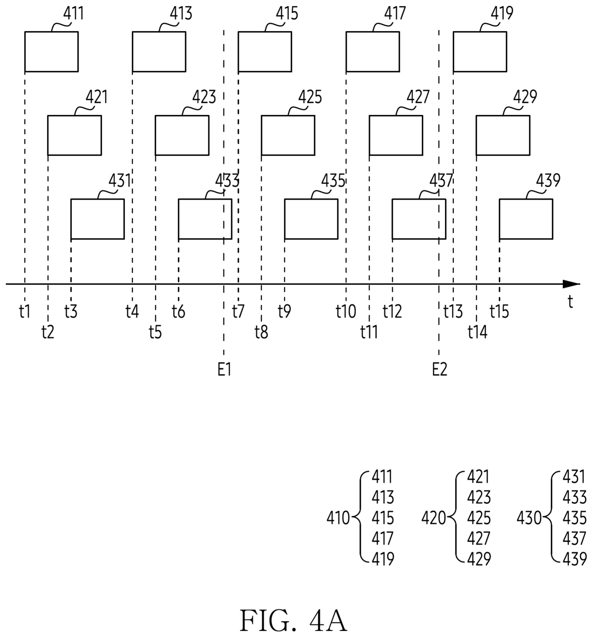

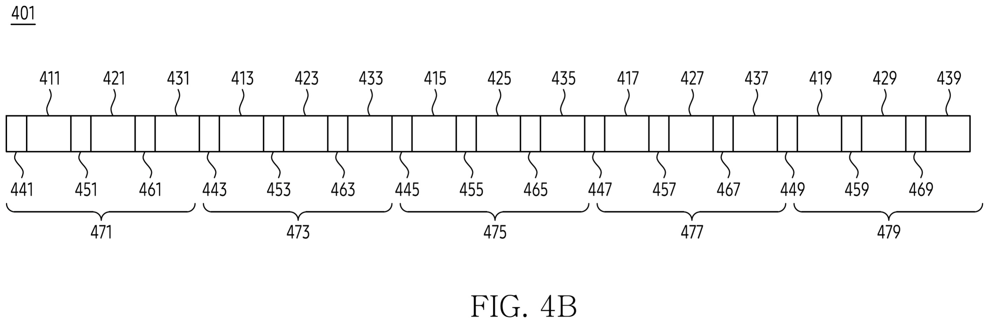

In an embodiment, the encoded stream tiling processing unit 243 may arrange the frames included in each of the encoded source videos in a designated tile format. Hereinafter, an example of an operation for arranging the frames included in each of the encoded source videos in the designated tile format by the electronic device 201 will be described with reference to FIGS. 4A and 4B.

In an embodiment, the meta track writing unit 244 may store information on a frame to be played among frames included in one track of video data in the video data. For example, the information on the frame to be played may include a camera identification (ID) and/or a sample ID for a frame to be played among frames of each of timestamp numbers. The information on the frame to be played may also be referred to as a timed meta track.

In an embodiment, the video track writing unit 245 may generate video data including the frames arranged in the designated tile format on one track.

In an embodiment, the format header writing unit 246 may include information for playing a video included in one track including the frames arranged in the designated tile format of the video data. For example, the information for playing the video may include a camera ID, a timestamp diff correction, an offset, a size, and/or camera info. In an embodiment, the format header writing unit 246 may write an additional field associated with a recording mode, in a header (e.g., a moov) of the video data, to the video data. In an embodiment, the format header writing unit 246 may store it in a timed meta track stored at a designated position (e.g., the last portion of a file) of the video data for additional editing.

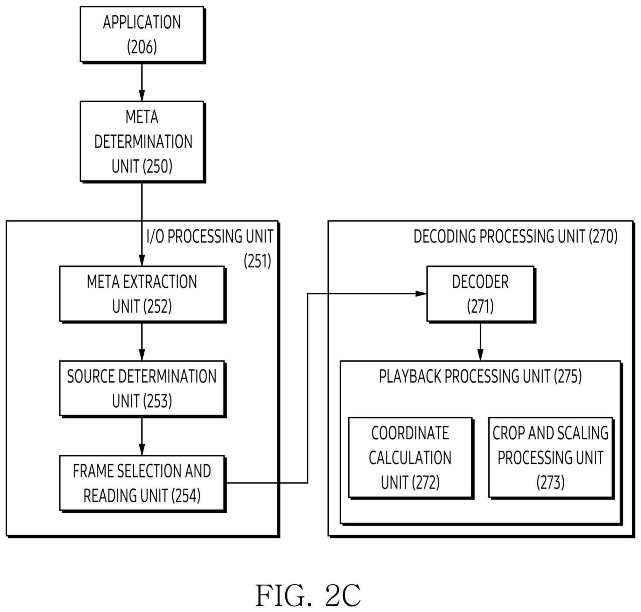

FIG. 2C is a block diagram of programs for decoding a video, according to an embodiment.

In an embodiment, an application 206 may be a program for playing and/or editing video data. In an embodiment, the application 206 may be a program for playing and/or editing video data generated by programs for decoding a video.

In an embodiment, a meta determination unit 250 may determine whether video data has a designated format. For example, the meta determination unit 250 may determine whether a timed meta track exists. For example, the meta determination unit 250 may determine whether the timed meta track exists. It may determine whether designated meta information exists in a user data area (e.g., a udta). For example, the designated meta information may include information (e.g., a camera ID, a timestamp diff correction, an offset, a size, and/or camera info) for playing a video.

In an embodiment, in a case that the timed meta track and/or the designated meta information exist, the meta determination unit 250 may read a position at which designated frames among a plurality of frames are recorded in the video data according to a playback scenario by the timed meta track and/or the designated meta information. In an embodiment, the meta determination unit 250 may determine a decoding method of the designated frames according to the playback scenario by the timed meta track and/or the designated meta information in a case that the timed meta track and/or the designated meta information exist.

In an embodiment, the meta determination unit 250 may directly request necessary data (or frames) to a transmitting device (e.g., an electronic device 201), according to a decoding capability of a receiving device (e.g., an electronic device 205) and/or the playback scenario, according to the playback scenario by the timed meta track and/or the designated meta information in a case that the timed meta track and/or the designated meta information exist during real-time streaming.

In an embodiment, an input/output (I/O) processing unit 251 may include a meta extraction unit 252, a source determination unit 253, and a frame selection and reading unit 254. In an embodiment, the meta extraction unit 252 may extract the timed meta track included in the video data. In a case that the timed meta track and/or the designated meta information exists, the meta extraction unit 252 may read the timed meta track and/or the designated meta information and provide the read timed meta track and/or designated meta information to the source determination unit 253. In an embodiment, the source determination unit 253 may identify a position at which frames designated according to a scenario among the plurality of frames in the video data are recorded based on the timed meta track and/or the designated meta information. In an embodiment, the frame selection and reading unit 254 may identify a position and/or a length of a frame by analyzing a header of a designated format. In an embodiment, the frame selection and reading unit 254 may access an area to be read on a track based on the position and/or the length of the identified frame.

In an embodiment, a decoding processing unit 270 may include a decoder 271 and a playback processing unit 275. In an embodiment, the playback processing unit 275 may include a coordinate calculation unit 272 and a crop and scaling processing unit 273.

In an embodiment, the decoder 271 may decode a frame read from the frame selection and reading unit 254. In an embodiment, the playback processing unit 275 may play the decoded frame. In an embodiment, the playback processing unit 275 may obtain position information in which a user input occurs through the coordinate calculation unit 272. In an embodiment, the playback processing unit 275 may perform buffer fusion (e.g., crop and/or scaling) on the decoded frame based on the user input through the crop and scaling processing unit 273.

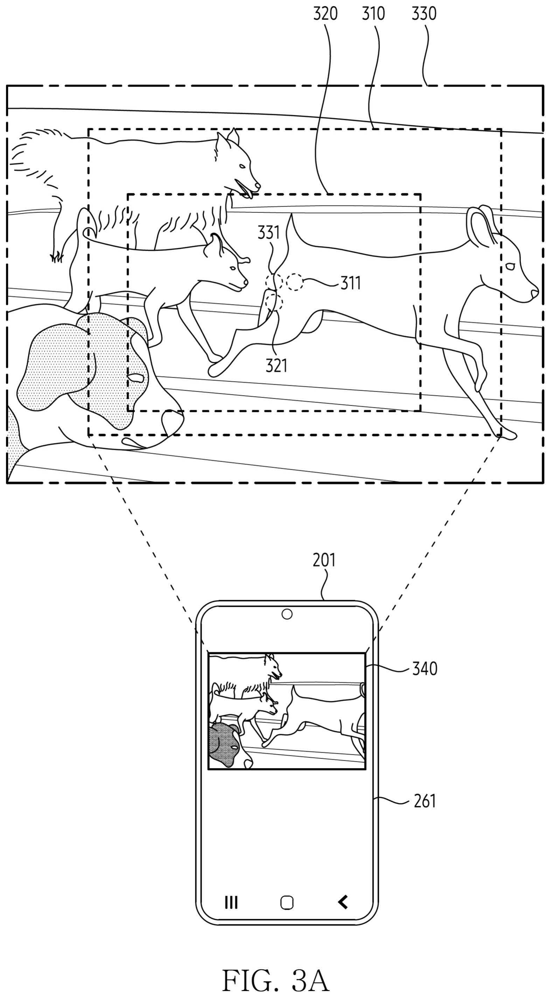

FIG. 3A illustrates an example of frames included in videos obtained by an electronic device via cameras.

In an embodiment, an electronic device 201 may obtain videos. For example, the electronic device 201 may obtain videos via cameras 281, 283, and 285. For example, the electronic device 201 may obtain videos via the cameras 281, 283, and 285 in response to identifying an image capturing event. Herein, the image capturing event may include a situation in which a user input to a capturing button is identified through a camera application. However, it is not limited thereto.

In an embodiment, the electronic device 201 may obtain a frame 310 via a first camera 281. In an embodiment, the electronic device 201 may obtain a frame 320 via a second camera 283. In an embodiment, the electronic device 201 may obtain a frame 330 via a third camera 285. Referring to FIG. 3A, the cameras 281, 283, and 285 may have different positions at which center points face. In an embodiment, in a case that the cameras 281, 283, and 285 are disposed at different positions on the same surface of the electronic device 201, the cameras 281, 283, and 285 may have different positions at which the center points face. Referring to FIG. 3A, a center point 311 of the frame 310 obtained via the camera 281, a center point 321 of the frame 320 obtained via the camera 283, and a center point 331 of the frame 330 obtained via the camera 285 may be different. In an embodiment, the electronic device 201 may preprocess the frames 310, 320, and 330 such that the center points 311, 321, and 331 of the frames 310, 320, and 330 obtained by the cameras 281, 283, and 285 are positioned at the same position. Hereinafter, the frames obtained by the cameras 281, 283, and 285 may be exemplified as being preprocessed such that the respective center points are positioned at the same position.

In an embodiment, the electronic device 201 may display frames included in one video of videos on a preview area 340 of a display 261. In an embodiment, while obtaining videos, the electronic device 201 may display the frames included in the one video on the preview area 340 of the display 261. For example, the electronic device 201 may display frames included in a video obtained via a main camera (e.g., the first camera 281) according to an obtained order in the preview area 340 of the display 261.

In an embodiment, the electronic device 201 may identify at least one input (or event) while obtaining videos. Herein, the at least one input (or event) may be associated with a preview image. In a case that the input is to change a field of view (FOV) of the preview image and to change an angle of view (AOV) of the preview image, or to change (or switch) a source camera (or a source video) of the preview image, the input may be recognized (or evaluated) as being associated with the preview image. However, it is not limited thereto.

In an embodiment, the electronic device 201 may change (or switch) the source camera (or the source video) of the preview image while obtaining videos. In an embodiment, the electronic device 201 may change (or switch) the source camera (or the source video) of the preview image in response to the at least one input (or event).

For example, the electronic device 201 may change the source camera (or the source video) from the first camera 281 (or a wide-angle camera) to the second camera 283 (or a telephoto camera) in response to an input for enlarging (or zooming-in) the preview image displayed through the preview area 340. For example, the electronic device 201 may change the source camera (or the source video) of the preview image displayed in the preview area 340 or enlarge the preview image displayed in the preview area 340 based on a degree of the enlargement (or a degree of the zoom-in) of the preview image. For example, in a case that magnification according to the zoom-in by the input is less than 3 times, the electronic device 201 may enlarge the preview image and display it on the display 261 without changing the source camera (or the source video). For example, in a case that the magnification according to the zoom-in by the input is 3 times or more, the electronic device 201 may change the source camera (or the source video).

For example, the electronic device 201 may change the source camera (or the source video) from the first camera 281 (or the wide-angle camera) to the third camera 285 (or an ultra-wide angle camera) in response to an input to reduce (or zoom-out) the preview image. For example, the electronic device 201 may change the source camera (or the source video) of the preview image displayed in the preview area 340 or reduce the preview image displayed in the preview area 340 based on a degree of the reduction (or a degree of the zoom-out) of the preview image. For example, in a case that magnification according to the zoom-out by the input exceeds 0.8 times, the electronic device 201 may reduce the preview image and display it on the display 261 without changing the source camera (or the source video). For example, in a case that the magnification according to the zoom-out by the input is 0.8 times or less, the electronic device 201 may change the source camera (or the source video).

For example, in response to an input for switching the source camera (or the source video) of the preview image displayed in the preview area 340, the electronic device 201 may change the source camera (or the source video) to the source camera (or the source video) corresponding to the input.

In an embodiment, the electronic device 201 may obtain information on the at least one input (or event) that occurs while obtaining videos. For example, the electronic device 201 may obtain at least one of information on an occurrence time of the at least one input (or event), whether the preview image is enlarged and/or reduced, the degree of the enlargement and/or the reduction, or whether the source camera is switched.

In an embodiment, the electronic device 201 may store videos as one video data. In an embodiment, the electronic device 201 may store videos as one video data including on one track. Herein, the track may be a collection of frames (or samples). Hereinafter, an example of an operation for storing one video data including videos on one track by the electronic device 201 will be described with reference to FIGS. 4A and 4B.

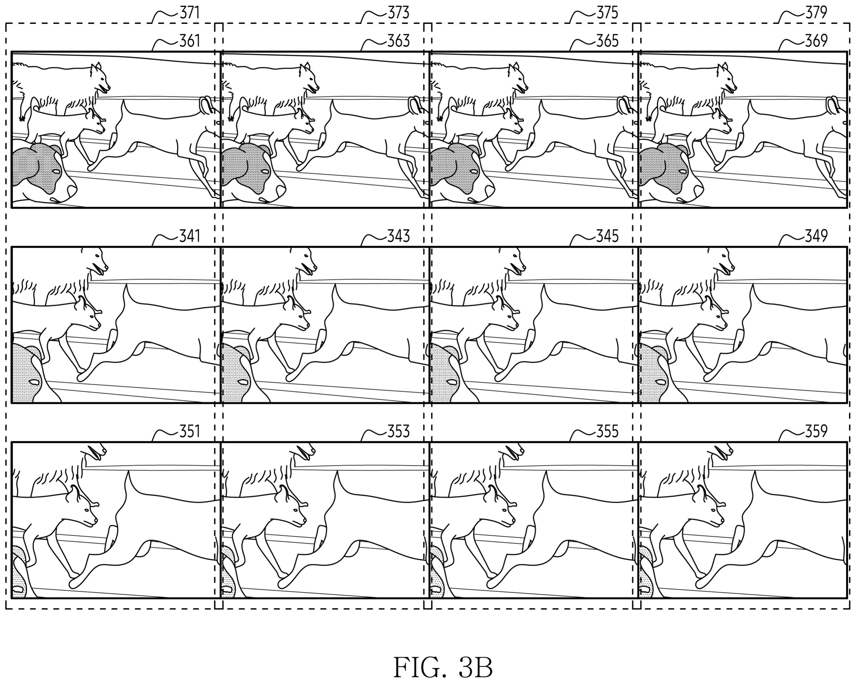

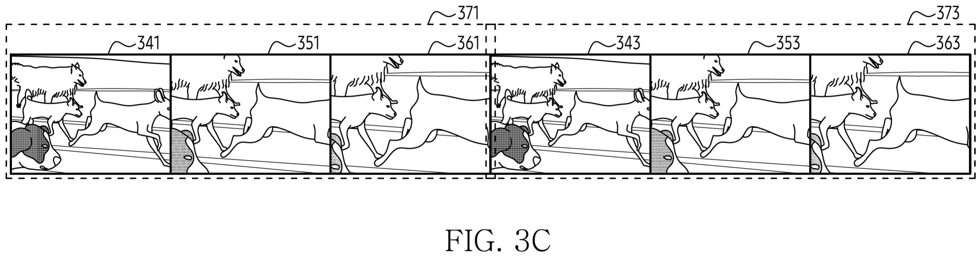

FIG. 3B illustrates an example of frames included in videos obtained by an electronic device via cameras. FIG. 3C illustrates an example of an operation of disposing frames included in videos obtained by an electronic device via cameras into one track.

According to an embodiment, an electronic device 201 may obtain videos via cameras 281, 283, and 285.

In an embodiment, the electronic device 201 may obtain a video including frames 341, 343, 345, and 347 via a first camera 281. For example, the first camera 281 may obtain the video including the frames 341, 343, 345, and 347 based on a capturing command from a processor 221 of the electronic device 201. For example, the first camera 281 may obtain the video including the frames 341, 343, 345, and 347 captured at a period (e.g., 16.6 milliseconds) according to a frame rate (e.g., 60 frames per second (FPS)). For example, the first camera 281 may obtain the video including the frames 341, 343, 345, and 347 captured at each of capturing time points 371, 373, 375, and 379.

In an embodiment, the electronic device 201 may obtain a video including frames 351, 353, 355, and 357 via a second camera 283. For example, the second camera 283 may obtain the video including the frames 351, 353, 355, and 357 based on a capturing command from the processor 221 of the electronic device 201. For example, the second camera 283 may obtain the video including the frames 351, 353, 355, and 357 captured at the period (e.g., 16.6 milliseconds) according to the frame rate (e.g., 60 FPS). For example, the second camera 283 may obtain the video including the frames 351, 353, 355, and 357 captured at each of the capturing time points 371, 373, 375, and 379.

In an embodiment, the electronic device 201 may obtain a video including frames 361, 363, 365, and 367 via a third camera 285. For example, the third camera 285 may obtain the video including the frames 361, 363, 365, and 367 based on a capturing command from the processor 221 of the electronic device 201. For example, the third camera 285 may obtain the video including the frames 361, 363, 365, and 367 captured at the period (e.g., 16.6 milliseconds) according to the frame rate (e.g., 60 FPS). For example, the third camera 285 may obtain the video including the frames 361, 363, 365, and 367 captured at each of the capturing time points 371, 373, 375, and 379.

Referring to FIG. 3C, in an embodiment, the electronic device 201 may generate video data such that frames 341, 343, 345, 347, 351, 353, 355, 357, 361, 363, 365, and 367 are included on one video track 401. In an embodiment, the electronic device 201 may generate video data including the one video track 401 in which the frames 341, 343, 345, 347, 351, 353, 355, 357, 361, 363, 365, and 367 are arranged in a playback order. For example, the frames being arranged in the playback order may mean that the frames 341, 343, 345, 347, 351, 353, 355, 357, 361, 363, 365, and 367 are arranged according to an order of a timestamp (or a playback time and a presentation time). As the frames are arranged in the playback order, frames included in another video may be inserted between frames included in one video. For example, between the frames 341 and 343, the other frames 351 and 361 obtained between the capturing time points 371 and 373 may be included.

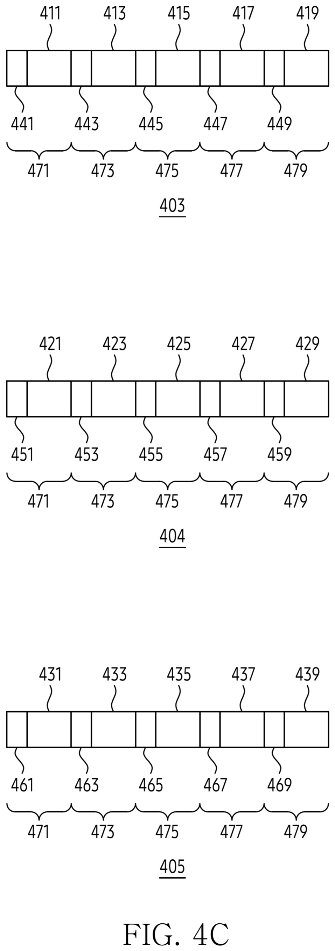

FIG. 4A illustrates an example of frames obtained via a plurality of cameras, according to an embodiment. FIG. 4B illustrates an example of a structure in which frames of a plurality of videos are arranged on one track, according to an embodiment. FIG. 4C illustrates an example of a structure in which frames of a plurality of videos are arranged on different tracks.

FIGS. 4A and 4B may be described with reference to FIGS. 1, 2A, 2B, 3A, 3B, and 3C.

According to an embodiment, an electronic device 201 may obtain videos 410, 420, and 430 via cameras 281, 283, and 285.

The electronic device 201 may obtain a video 410 including frames 411, 413, 415, 417, and 419 via a first camera 281. For example, the first camera 281 may obtain the video 410 including the frames 411, 413, 415, 417, and 419 based on a capturing command from a processor 221 of the electronic device 201. For example, the first camera 281 may obtain the video 410 including the frames 411, 413, 415, 417, and 419 captured at a period (e.g., 16.6 milliseconds) according to a frame rate (e.g., 60 frames per second (FPS)). For example, the first camera 281 may obtain the video 410 including the frames 411, 413, 415, 417, and 419 captured at each of capturing time points t1, t4, t7, t10, and t13. For example, a time length between two neighboring capturing time points among the capturing time points t1, t4, t7, t10, and t13 may be determined according to the frame rate. For example, in a case that the frame rate is 60, the time length between two neighboring capturing time points may be 16.6 milliseconds.

The electronic device 201 may obtain a video 420 including frames 421, 423, 425, 427, and 429 via a second camera 283. For example, the second camera 283 may obtain the video 420 including the frames 421, 423, 425, 427, and 429 based on a capturing command from the processor 221 of the electronic device 201. For example, the second camera 283 may obtain the video 420 including the frames 421, 423, 425, 427, and 429 captured at the period (e.g., 16.6 milliseconds) according to the frame rate (e.g., 60 FPS). For example, the second camera 283 may obtain the video 420 including the frames 421, 423, 425, 427, and 429 captured at each of capturing time points t2, t5, t8, t11, and t14. For example, a time length between two neighboring capturing time points among the capturing time points t2, t5, t8, t11, and t14 may be determined according to the frame rate. For example, in a case that the frame rate is 60, the time length between two neighboring capturing time points may be 16.6 milliseconds.

The electronic device 201 may obtain a video 430 including frames 431, 433, 435, 437, and 439 via a third camera 285. For example, the third camera 285 may obtain the video 430 including the frames 431, 433, 435, 437, and 439 based on a capturing command from the processor 221 of the electronic device 201. For example, the third camera 285 may obtain the video 430 including the frames 431, 433, 435, 437, and 439 captured at the period (e.g., 16.6 milliseconds) according to the frame rate (e.g., 60 FPS). For example, the third camera 285 may obtain the video 430 including the frames 431, 433, 435, 437, and 439 captured at each of the capturing time points t3, t6, t9, t12, and t15. For example, a time length between two neighboring capturing time points among the capturing time points t3, t6, t9, t12, and t15 may be determined according to the frame rate. For example, in a case that the frame rate is 60, the time length between two neighboring capturing time points may be 16.6 milliseconds.

In an embodiment, each of the capturing time points may indicate a timestamp of a corresponding frame. For example, the capturing time t1 of the frame 411 may indicate the timestamp of the frame 411, the capturing time t2 of the frame 421 may indicate the timestamp of the frame 412, and the capturing time t3 of the frame 431 may indicate the timestamp of the frame 413.

Referring to FIG. 4A, there may be a time difference between capturing time points of the cameras 281, 283, and 285 operating synchronously with a clock of the electronic device 201. For example, a difference in capturing time points of sub-cameras (e.g., the second camera 283 and the third camera 285) for a main camera (e.g., the first camera 281) may also be referred to as a timestamp difference. For example, a difference t2-t1 in capturing time points between the frame 421 and the frame 411 may be a timestamp difference of the frame 421. For example, a difference t3-t1 in capturing time points between the frame 431 and the frame 411 may be a timestamp difference of the frame 431. For example, a timestamp difference between frames obtained via the main camera (e.g., the first camera 281) may be zero.

In an embodiment, the electronic device 201 may identify at least one event E1 and/or E2 while obtaining the videos 410, 420, and 430 via the cameras 281, 283, and 285. For example, the at least one event E1 and/or E2 may include identification of an input for a user control of a video being captured. For example, the at least one event E1 and/or E2 may be associated with a preview image. For example, the at least one event E1 and/or E2 may include identification of an input requesting a change (or a switch) of a source camera (or a source video) for displaying the preview image among the cameras 281, 283, and 285.

For example, the electronic device 201 may identify the event E1. For example, the electronic device 201 may identify the event E1 for zoom-in. According to magnification according to the zoom-in by the event E1, the electronic device 201 may change a source video of a preview image displayed through a display 261. For example, in a case that the magnification according to the zoom-in by the event E1 is more than 0.8 times and less than 3 times, the electronic device 201 may not change the source video of the preview image displayed through the display 261 from the video 410 obtained by the first camera 281. For example, in a case that the magnification according to the zoom-in by the event E1 is 3 times or more, the electronic device 201 may change the source video of the preview image displayed through the display 261 from the video 410 obtained by the first camera 281 to the video 420 obtained by the second camera 283.

According to an embodiment, the electronic device 201 may identify the event E2. For example, the electronic device 201 may identify the event E2 for zoom-out. According to magnification according to the zoom-out by the event E2, the electronic device 201 may change the source video of the preview image displayed through the display 261. For example, in a case that the magnification according to the zoom-out by the event E2 is more than 0.8 times and less than 3 times, the electronic device 201 may change the source video of the preview image displayed through the display 261 from the video 420 obtained by the second camera 283 to the video 410 obtained by the first camera 281. For example, in a case that the magnification according to the zoom-out by the event E2 is 0.8 times or less, the electronic device 201 may change the source video of the preview image displayed through the display 261 from the video 420 obtained by the second camera 283 to the video 430 obtained by the third camera 285. For example, in a case that the magnification according to the zoom-out by the event E1 is 3 times or more, the electronic device 201 may not change the source video of the preview image displayed through the display 261 from the video 420 obtained by the camera 283.

According to an embodiment, while the cameras 281, 283, and 285 obtain a video, the electronic device 201 may sequentially display the frame 411, the frame 413, the frame 425, the frame 427, and the frame 419 as a preview image of the video on the display 261 based on the at least one event E1 and/or E2.

Referring to FIG. 4B, in an embodiment, the electronic device 201 may generate video data such that the frames 411, 413, 415, 417, 419, 421, 423, 425, 427, 429, 431, 433, 435, 437, and 439 are included in one video track 401. In an embodiment, the electronic device 201 may generate video data including the one video track 401 in which the frames 411, 413, 415, 417, 419, 421, 423, 425, 427, 429, 431, 433, 435, 437, and 439 are arranged in a playback order. For example, the frames being arranged in the playback order may mean that the frames 411, 413, 415, 417, 419, 421, 423, 425, 427, 429, 431, 433, 435, 437, and 439 are arranged according to an order of a timestamp (or a playback time and a presentation time). As the frames are arranged in the playback order, frames included in another video may be inserted between frames included in one video. For example, between the frames 411 and 413, the other frames 421 and 431 obtained between the capturing time points t1 and t4 may be included.

In an embodiment, the electronic device 201 may allocate timestamp numbers 471, 473, 475, 477, and 479 to the frames 411, 413, 415, 417, 419, 421, 423, 425, 427, 429, 431, 433, 435, 437, and 439. For example, the electronic device 201 may allocate different timestamp numbers 471, 473, 475, 477, and 479 to frames included in the same video. For example, the electronic device 201 may allocate the same stamp numbers 471, 473, 475, 477, and 479 to some frames of frames included in different videos.

In an embodiment, the electronic device 201 may allocate the timestamp numbers 471, 473, 475, 477, and 479 according to timestamps of the frames 411, 413, 415, 417, 419, 421, 423, 425, 427, 429, 431, 433, 435, 437, and 439. In an embodiment, the electronic device 201 may allocate the timestamp numbers 471, 473, 475, 477, and 479 according to an order of the timestamps of the frames 411, 413, 415, 417, 419, 421, 423, 425, 427, 429, 431, 433, 435, 437, and 439.

For example, the electronic device 201 may allocate the earliest timestamp number 471 to the frame 411 having the earliest timestamp among the timestamps of the frames 411, 413, 415, 417, 419, 421, 423, 425, 427, 429, 431, 433, 435, 437, and 439. For example, the electronic device 201 may allocate the earliest timestamp number 471 to the frame 411, having the earliest timestamp among the timestamps of the frames 411, 413, 415, 417, and 419 obtained via the main camera (e.g., the first camera 281). For example, the electronic device 201 may allocate each of the timestamp numbers 473, 475, 477, and 479 obtained via the main camera (e.g., the first camera 281) to each of the frames 413, 415, 417, and 419.

In an embodiment, the electronic device 201 may allocate timestamp numbers of the frames 421, 423, 425, 427, 429, 431, 433, 435, 437, and 439 obtained via the sub-cameras (e.g., the second camera 283 and the third camera 285) based on the timestamp numbers 471, 473, 475, 477, and 479 of the frames 411, 413, 415, 417, and 419 obtained via the main camera (e.g., the first camera 281). For example, the electronic device 201 may allocate the timestamp number of the frames 411, 413, 415, 417, and 419 having a timestamp corresponding to each of the frames 421, 423, 425, 427, 429, 431, 433, 435, 437, and 439 as the timestamp number of each of the frames 421, 423, 425, 427, 429, 431, 433, 435, 437, and 439. For example, the electronic device 201 may allocate a timestamp number of a first frame obtained via the main camera having a timestamp corresponding to a second frame obtained via the sub-camera as a timestamp number of the second frame. Herein, correspondence of the timestamp may mean a case in which a timestamp difference between frames is less than a designated time length (e.g., a playback time (or duration)). In a case that the second frame is obtained via the sub-camera within the designated time length (e.g., the playback time (or the duration)) from the obtained time of the first frame via the main camera, a timestamp of the first frame and a timestamp of the second frame may be considered to correspond to each other. For example, the timestamps of the frames 421 and 431 obtained within the designated time length (e.g., the playback time (or the duration)) from the time point t1 may correspond to the timestamp of the frame 411. Accordingly, the timestamp numbers of the frames 421 and 431 may be the same as the timestamp number 471 of the frame 411. Likewise, the timestamp numbers of the frames 423 and 433 may be the same as the timestamp number 473 of the frame 413. The timestamp numbers of the frames 425 and 435 may be the same as the timestamp number 475 of the frame 415. The timestamp numbers of the frames 427 and 437 may be the same as the timestamp number 477 of the frame 417. The timestamp numbers 479 of the frames 429 and 439 may be the same as the timestamp number 479 of the frame 419.

In an embodiment, the one video track 401 of the video data may include headers 441, 443, 445, 447, 449, 451, 453, 455, 457, 459, 461, 463, 465, 467, and 469 for the frames 411, 413, 415, 417, 419, 421, 423, 425, 427, 429, 431, 433, 435, 437, and 439. Each of the headers 441, 443, 445, 447, 449, 451, 447, 455, 457, 459, 461, 463, 465, 467, and 469 may be positioned before each of the frames 411, 413, 415, 417, 419, 421, 423, 425, 427, 429, 431, 433, 435, 437, and 439. Each of the headers 441, 443, 445, 447, 449, 451, 447, 455, 457, 459, 461, 463, 465, 467, and 469 may indicate size information of a frame positioned next to it.

Referring to FIG. 4C, the electronic device 201 may generate video data in which the frames 411, 413, 415, 417, 419, 421, 423, 425, 427, 429, 431, 433, 435, 437, and 439 are included in a plurality of video tracks 403, 404, and 405.

In an embodiment, the electronic device 201 may generate video data in which the frames 411, 413, 415, 417, 419, 421, 423, 425, 427, 429, 431, 433, 435, 437, and 439 obtained via each of the cameras 281, 283, and 285 are included in the plurality of video tracks 403, 404, and 405. For example, the electronic device 201 may generate video data in which the frames 411, 413, 415, 417, and 419 obtained via the camera 281 are included in the video track 403, the frames 421, 423, 425, 427, and 429 obtained via the camera 283 are included in the video track 404, and the frames 431, 433, 435, 437, and 439 obtained via the camera 285 are included in the video track 405.

For example, the frames 411, 413, 415, 417, 419, 421, 423, 425, 427, 429, 431, 433, 435, 437, and 439 included in each of the plurality of video tracks 403, 404, and 405 may be arranged in a playback order.

In a case that videos obtained via a plurality of cameras 481, 483, and 485 are stored in the different video tracks 403, 404, and 405 as illustrated in FIG. 4C, playback may be interrupted due to an operation to find a frame to be played and/or a reference frame for decoding when changing a video track during video playback. Specifically, in a case that the videos obtained via the plurality of cameras 481, 483, and 485 are stored in the different video tracks 403, 404, and 405 as illustrated in FIG. 4C, the different video tracks 403, 404, and 405 may be scattered and stored in the video data at a position of any file offset without physical continuity. In addition, audio data may be interleaved and stored in the video data for synchronization between the videos and the audio data corresponding to each of them in a case that the videos obtained via the plurality of cameras 481, 483, and 485 are stored in the different video tracks 403, 404, and 405 as illustrated in FIG. 4C. Accordingly, in a case that the videos obtained via the plurality of cameras 481, 483, and 485 are stored in the different video tracks 403, 404, and 405 as illustrated in FIG. 4C, since a file search and/or read operation is performed to move a position of a current file pointer to another position, and then it should be moved back to the current position to access a plurality of videos, time may be required for a file input and/or output. In addition, in a case that the videos obtained via the plurality of cameras 481, 483, and 485 are stored in the different video tracks 403, 404, and 405 as illustrated in FIG. 4C, time may be required to search for a frame to be played, to search for an IDR frame and/or a P frame or a B frame for decoding a frame to be played, and to decode the corresponding frame when changing a video track during video playback. In addition, in a case that the videos obtained via the plurality of cameras 481, 483, and 485 are stored in the different video tracks 403, 404, and 405 as illustrated in FIG. 4C, more time may be required for post-processing (e.g., crop) of a frame to be played when changing a video track during video playback. In addition, in a case that the videos obtained via the plurality of cameras 481, 483, and 485 are stored in the different video tracks 403, 404, and 405 as illustrated in FIG. 4C, as it is required that frames included in two or more tracks should be fused (or synthesized) into one frame when changing a video track during video playback, more time may be required for playing a frame. Accordingly, in a case that the videos obtained via the plurality of cameras 481, 483, and 485 are stored in the different video tracks 403, 404, and 405 as illustrated in FIG. 4C, it may not be easy to process the corresponding operation within a time (e.g., 16.6 ms) according to a designated frame rate (e.g., 60 Hz) when changing a video track during video playback.

In addition, in a case that the videos obtained via the plurality of cameras 481, 483, and 485 having different angles of view are stored in the different video tracks 403, 404, and 405, the different video tracks 403, 404, and 405 may be stored at a non-continuous position in the video data. Accordingly, in a case that the videos obtained via the plurality of cameras 481, 483, and 485 having different angles of view are simultaneously required, since an electronic device should access the non-continuous position during a file input and/or output, more time may be required to read data.

On the other hand, in a case that the videos obtained via the plurality of cameras 481, 483, and 485 are configured as one track, as illustrated in FIG. 4B, since the videos obtained via the plurality of cameras 481, 483, and 485 are stored at a continuous position in the video data, a time required for an operation to find a frame to be played and/or a reference frame for decoding may be decreased. In addition, in a case that the videos obtained via the plurality of cameras 481, 483, and 485 are configured as one track, as illustrated in FIG. 4B, a time required for an operation to find a frame to be played and/or a reference frame for decoding may be decreased by processing a read in units of samples. For example, in a case that the videos obtained via the plurality of cameras 481, 483, and 485 are configured as one track, as illustrated in FIG. 4B, a file input and/or output delay according to a range-request operation (or track switching and seeking) of a file pointer may be decreased according to a change of a video required when reading a bitstream of a desired playback position.

In a case that the videos obtained via the plurality of cameras 481, 483, and 485 are stored in the different video tracks 403, 404, and 405 as illustrated in FIG. 4C, as video data is streamed, video track of a different video from a video currently being played may not be downloaded in downloaded data (or cached data). In this case, in order to play the different video from the video currently being played, a range-request may be generated. In addition, in this case, movement of a file pointer may be required to play the different video from the video currently being played, and to move from the different video from the video currently being played again. Accordingly, a plurality of range-requests may occur, and buffering may occur according to a bandwidth of a network for streaming video data.

On the other hand, in a case that the videos obtained via the plurality of cameras 481, 483, and 485 are configured as one track, as illustrated in FIG. 4B, when video data is streamed, by being downloaded (or cached) in units of a samples, the occurrence of range-request may be decreased in order to play the different video from the video currently being played.

In a case that the videos obtained via the plurality of cameras 481, 483, and 485 are stored in the different video tracks 403, 404, and 405 as illustrated in FIG. 4C, data may increase excessively as frames not used at a playback time are maintained in video data. On the other hand, in a case that the videos obtained via the plurality of cameras 481, 483, and 485 are configured as one track, as illustrated in FIG. 4B, a size of video data may be decreased by excluding a frame for videos not required in units of samples.

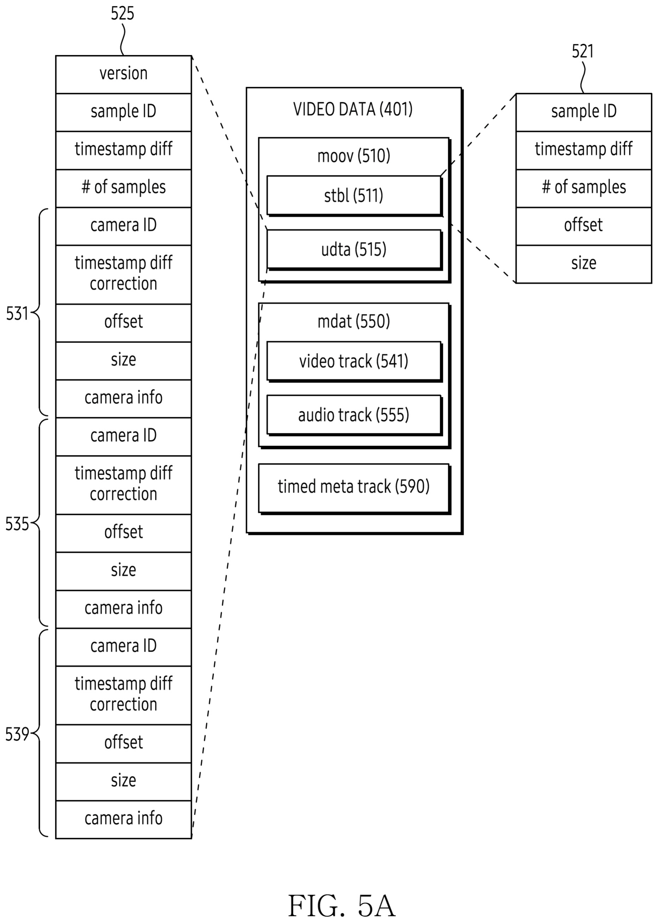

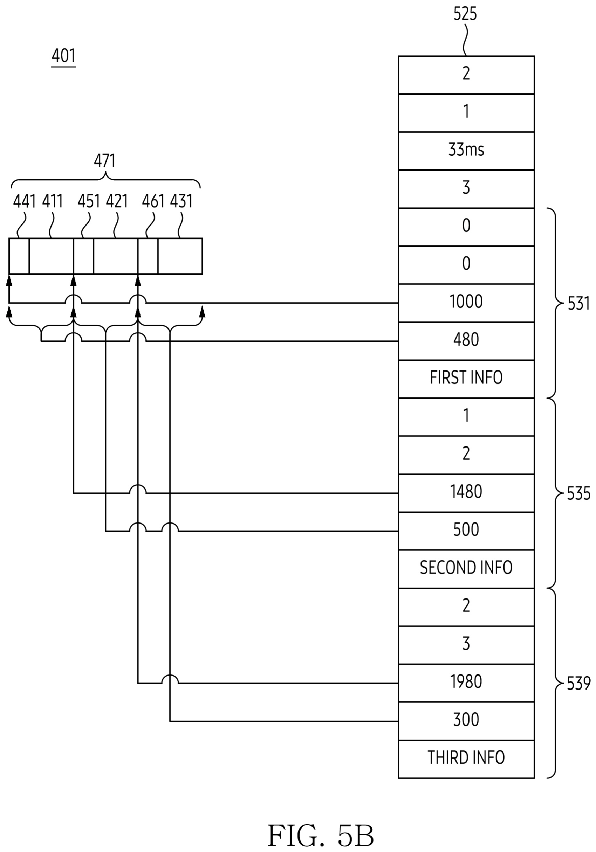

Hereinafter, a structure of the video track 401 generated by the electronic device 201 will be described with reference to FIGS. 5A and 5B.

FIG. 5A illustrates an example of a structure of video data 501 according to an embodiment. FIG. 5B illustrates an example of an operation of specifying a position of a frame according to a structure of video data, according to an embodiment.

FIGS. 5A and 5B may be described with reference to FIGS. 1, 2A, 2B, 3A, 3B, 3C, 4A, 4B, and 4C.

Referring to FIG. 5A, the video data 501 may include a moov box 510, an mdat box 550, and a timed meta track box 590.

In an embodiment, the moov box 510 may store metadata of videos 410, 420, and 430. For example, the moov box 510 may store metadata 521 and 525 of the videos 410, 420, and 430 through an stbl box 511 and/or a udta box 515. In an embodiment, the stbl box 511 may be referred to as a metadata area. In an embodiment, the udta box 515 may be referred to as a user data area.

In an embodiment, an electronic device 201 may store metadata 521 for a video 410 obtained via a main camera (e.g., a first camera 281) through the stbl box 511.

In an embodiment, the metadata 521 stored in the stbl box 511 may be data for backward compatibility. For example, in the metadata 521 stored in the stbl box 511, the metadata 521 stored in the stbl box 511 may be used to play the video 410 obtained via the main camera (e.g., the first camera 281) among the videos 410, 420, and 430.

In an embodiment, a sample identification (ID) field of the metadata 521 may indicate an ID of a frame (or a sample) indicated by the metadata 521. According to an embodiment, the ID of the frame (or the sample) may indicate a timestamp number. A # of samples field of the metadata 521 may indicate the number of frames (or samples) indicated by the metadata 521.

In an embodiment, an offset field of the metadata 521 may indicate information on a position (or an address in the video data 501) of the frame (or the sample) indicated by the metadata 521. A size field of the metadata 521 may indicate information on a size of the frame (or the sample) indicated by the metadata 521.

For example, the electronic device 201 may generate the metadata 521 for frames 411, 413, and 415 stored in the stbl box 511 as illustrated in Table 1 below. In Table 1, it is exemplified that the metadata 521 includes meta information for the three frames 411, 413, and 415, but it is merely an example. The metadata 521 may include meta information on all of frames 411, 413, 415, 417, and 419 included in the video 410.

**[Table 1]**

| Sample ID | 1 | 2 | 3 |
|---|---|---|---|
| Timestamp diff | 33 milliseconds | 34 milliseconds | 32 milliseconds |
| # Of samples | 1 | 1 | 1 |
| Offset | 1000 | 2280 | 3230 |
| Size | 480 | 250 | 370 |

Referring to Table 1, an electronic device 205 that plays the video data 501 may play data (or the frame 411) from a start position 1000 indicated by the offset field to a position 1479 according to a length 480 indicated by the size field for 33 milliseconds that are a time length indicated by a timestamp diff field, as a first frame, with reference to the metadata 521. In addition, the electronic device 205 may play data (or the frame 413) from a start position 2280 indicated by the offset field to a position 2529 according to a length 250 indicated by the size field for 34 milliseconds that are a time length indicated by the timestamp diff field, as a second frame. Finally, the electronic device 205 may play data (or the frame 415) from a start position 3230 indicated by the offset field to a position 3599 according to a length 370 indicated by the size field for 32 milliseconds that are a time length indicated by the timestamp diff field, as a third frame.

In an embodiment, the electronic device 201 may store metadata 525 for videos 420 and 430 obtained via sub-cameras (e.g., a second camera 283 and a third camera 285) through the udta box 515. For example, the electronic device 201 may store the metadata 525 for the video 410 obtained via the main camera (e.g., the first camera 281) and the videos 420 and 430 obtained via the sub-cameras (e.g., the second camera 283 and the third camera 285) through the udta box 515.

In an embodiment, the metadata 525 stored in the udta box 515 may be used for selectively playing the videos 410, 420, and 430. Herein, selectively playing the videos 410, 420, and 430 may mean that a video being played may be changed by selection during a playback time of the videos 410, 420, and 430.

According to an embodiment, the metadata 525 stored in the udta box 515 may be used for playing the videos 410, 420, and 430 by the metadata 525 stored in the udta box 515.

In an embodiment, a version field of the metadata 525 may indicate a version of the metadata 525. A sample identification (ID) field of the metadata 525 may indicate an ID of a frame (or a sample) indicated by the metadata 525. According to an embodiment, the ID of the frame (or the sample) may indicate a timestamp number. A timestamp diff field of the metadata 525 may indicate a playback time length of the frame (or the sample) indicated by the metadata 525. A # of samples field of the metadata 525 may indicate the number of frames (or samples) indicated by the metadata 525. A camera ID field of the metadata 525 may indicate an ID of a camera that has obtained the frame (or the sample) indicated by the metadata 525.

In an embodiment, a timestamp diff correction field of the metadata 525 may indicate information for correcting a playback time point of the frame (or the sample) indicated by the metadata 525. For example, the timestamp diff correction field may indicate information (or a composition time to sample (CTTS)) to correct a time difference from a decoding time point of the frame (or the sample) indicated by the metadata 525 to a playback time point (or a composition time). For example, in a case that the frame (or the sample) indicated by the metadata 525 is a designated type of frame (e.g., a bi-directional prediction (B) frame), the timestamp diff correction field may further include information (or the CTTS) to correct the time difference from the decoding time point to the playback time point.

In an embodiment, an offset field of the metadata 525 may indicate information on a position (or an address in the video data 501) of the frame (or the sample) indicated by the metadata 525. A size field of the metadata 525 may indicate information on a size of the frame (or the sample) indicated by the metadata 525. A camera info field of the metadata 525 may indicate information (e.g., an angle of view, a field of view, disposition information, brightness, a color temperature, and an f number) of the camera that has obtained the frame (or the sample) indicated by the metadata 525.

In an embodiment, the metadata 525 stored in the udta box 515 may include a plurality of some fields compared to the metadata 521 stored in the stbl box 511. For example, the metadata 525 may include a plurality of field sets 531, 535, and 539 including the camera ID field, the timestamp diff correction field, the offset field, the size field, and the camera info field. For example, the metadata 525 may include as many the field sets 531, 535, and 539 including the camera ID field, the timestamp diff correction field, the offset field, the size field, and the camera info field as the number of frames having the same sample ID (or timestamp number). For example, in a case that the videos 410, 420, and 430 are obtained, the metadata 525 may include the three field sets 531, 535, and 539.

For example, the electronic device 201 may generate the metadata 525 for frames 411, 413, 415, 421, 423, 425, 431, 433, and 435 stored in the udta box 515 as illustrated in Table 2 below. In Table 2, it is exemplified that the metadata 521 includes meta information for the nine frames 411, 413, 415, 421, 423, 425, 431, 433, and 435, but it is merely an example. The metadata 521 may include meta information on all frames included in the videos 410, 420, and 430.

**[Table 2]**

| Version | | 2 | 2 | 2 |
|---|---|---|---|---|
| Sample ID | | 1 | 2 | 3 |
| Timestamp diff | | 33 milliseconds | 34 milliseconds | 32 milliseconds |
| # Of samples | | 3 | 3 | 3 |
| Field set 531 | Camera ID | 0 | 0 | 0 |
| | Timestamp diff correction | 0 | 0 | 0 |
| | Offset | 1000 | 2280 | 3230 |
| | Size | 480 | 250 | 370 |
| | Camera info | FIRST INFO | FIRST INFO | FIRST INFO |
| Field set 535 | Camera ID | 1 | 1 | 1 |
| | Timestamp diff correction | 2 | 1 | 1 |
| | Offset | 1480 | 2530 | 3600 |
| | Size | 500 | 450 | 470 |
| | Camera info | SECOND INFO | SECOND INFO | SECOND INFO |
| Field set 539 | Camera ID | 2 | 2 | 2 |
| | Timestamp diff correction | 3 | 4 | 3 |
| | Offset | 1980 | 2980 | 4070 |
| | Size | 300 | 250 | 320 |
| | Camera info | THIRD INFO | THIRD INFO | THIRD INFO |

Referring to Table 2, the electronic device 205 that plays the video data 501 may play frames based on data at a position indicated by the metadata 525.

In an embodiment, the electronic device 205 may identify a start position of a frame through the offset field. In an embodiment, the electronic device 205 may identify data as long as a length indicated by the size field from the start position of the frame identified through the offset field, as one frame. For example, referring to FIG. 5B, the electronic device 205 may identify a start position of a frame with the sample ID of 1 and the camera ID of 0 as 1000 through the value 1000 indicated by the offset field of the field set 531. For example, the electronic device 205 may identify the frame with the sample ID of 1 and the camera ID of 0 as having the length of 480 from the start position 1000 through the value 480 indicated by the side field of the field set 531. For example, the electronic device 205 may identify a start position of a frame with the sample ID of 1 and the camera ID of 1 as 1480 through the value 1480 indicated by the offset field of the field set 535. For example, the electronic device 205 may identify the frame with the sample ID of 1 and the camera ID of 1 as having the length of 500 from the start position 1480 through the value 500 indicated by the side field of the field set 535. For example, the electronic device 205 may identify a start position of a frame with the sample ID of 1 and the camera ID of 2 as 1980 through the value 1980 indicated by the offset field of the field set 539. For example, the electronic device 205 may identify the frame with the sample ID of 1 and the camera ID of 2 as having the length of 300 from the start position 1980 through the value 300 indicated by the side field of the field set 539.

For example, referring to FIG. 5B, the electronic device 205 may display the first frame on a display 265 for 33 milliseconds that are a time length identified by the timestamp diff field, based on at least one frame of data (or the frame 411) from the start position 1000 indicated by the offset field to the position 1479 according to the length 480 indicated by the size field, data (or the frame 421) from the start position 1480 indicated by the offset field to a position 1979 according to the length 500 indicated by the size field, or data (or the frame 431) from the start position 1980 indicated by the offset field to a position 2279 according to the length 300 indicated by the size field.

For example, the electronic device 205 may display the second frame on the display 265 for 34 milliseconds that are a time length indicated by the timestamp diff field, based on at least one frame of data (or the frame 413) from the start 2280 indicated by a position offset field to a position 2529 according to the length 250 indicated by the size field, data (or the frame 423) from the start position 2530 indicated by the offset field to a position 2979 according to the length 450 indicated by the size field, or data (or the frame 433) from the start position 2980 indicated by the offset field to a position 3229 according to the length 250 identified by the size field.

For example, the electronic device 205 may display the third frame on the display 265 for 32 milliseconds that are a time length indicated by the timestamp diff field, based on at least one frame of data (or the frame 415) from the start position 3230 indicated by the offset field to a position 3599 according to the length 370 indicated by the size field, data (or the frame 425) from a start position 3560 indicated by the offset field to a position 4069 according to the length 470 indicated by the size field, or data (or the frame 435) from the start position 4070 indicated by the offset field to a position 4389 according to the length 320 indicated by the size field.

In an embodiment, the electronic device 205 may adjust a playback time point of frames based on the value indicated by the timestamp diff correction field. For example, the electronic device 205 may advance a playback time point of frames by the value indicated by the timestamp diff correction field. For example, when the frame 421 is played, the electronic device 205 may advance a playback time point of the frame 421 by 2 milliseconds and display it on the display 265 for 33 milliseconds. For example, when the frame 431 is played, the electronic device 205 may advance a playback time point of the frame 431 by 3 milliseconds and display it on the display 265 for 33 milliseconds.

In an embodiment, the mdat box 550 may store the videos 410, 420, and 430 and audios corresponding to the videos 410, 420, and 430. For example, the mdat box 550 may store the videos 410, 420, and 430 through a video track box 551. In an embodiment, the electronic device 201 may store the video track 401 of the structure of FIG. 4B in the one video track box 551 of the mdat box 550. For example, the mdat box 550 may store the audios corresponding to the videos 410, 420, and 430 through an audio track box 555.

In an embodiment, the timed meta track box 590 may indicate information on a frame to be played. In an embodiment, the timed meta track box 590 may include information (e.g., a camera ID, and/or a sample ID) on a frame to be played among frames of each of timestamp numbers. For example, the timed meta track box 590 may indicate a frame to be played on a first timestamp among the frames 411, 421, and 431 having a first timestamp number.

In an embodiment, the timed meta track box 590 may include information (e.g., a camera ID, and/or a sample ID) on a frame to be played according to at least one event E1 and/or E2. For example, in a case that the event E1 is a zoom-in event and the event E2 is a zoom-out event, the timed meta track box 590 may indicate the frame 411, the frame 413, the frame 425, the frame 427, and the frame 419 as frames to be played.

In an embodiment, the timed meta track box 590 may store information on the at least one event E1 and/or E2. For example, the timed meta track box 590 may include information on the at least one event E1 and/or E2 occurred during capture of the videos 410, 420, and 430. For example, the timed meta track box 590 may include information on an input requesting a change (or a switch) of a source camera (or a source video) to display a preview image among the cameras 281, 283, and 285. Herein, the change (or the switch) of the source camera (or the source video) may include zoom-in, zoom-out, and/or a switch of the camera.

In an embodiment, the timed meta track box 590 may include information on whether the camera is changed according to the at least one event E1 and/or E2, and a time point when the camera is changed.

In an embodiment, the timed meta track box 590 may be indicated as a frame to be played for two or more frames among frames to be included in one timestamp number. For example, in a case that the event E1 is the zoom-in event, the timed meta track box 590 may indicate the frames 415 and 425 as frames to be played simultaneously for a smooth switch from the first camera 281 to the second camera 283. In this case, the electronic device 205 may play one frame based on the frames 415 and 425 on a third timestamp. Herein, one frame being based on the frames 415 and 425 may mean that one frame has an intermediate value of the frames 415 and 425. One frame being based on the frames 415 and 425 may mean that one frame is weighted average from the frames 415 and 425. For example, in a case that the event E2 is the zoom-out event, the timed meta track box 590 may indicate the frames 419 and 429 as frames to be played simultaneously for a smooth switch from the second camera 283 to the first camera 281. In this case, the electronic device 205 may play one frame based on the frames 419 and 429 on a fifth timestamp. Herein, one frame being based on the frames 419 and 429 may mean a frame (e.g., a frame weighted average of the frames 419 and 429) with an intermediate value of the frames 419 and 429.

According to an embodiment, the electronic device 201 may generate the metadata 525 for the some frames 411, 413, 415, 421, 425, and 431 stored in the udta box 515 as illustrated in Table 3 below. The some frames 411, 413, 415, 421, 425, and 431 of Table 3 may be some of the frames 411, 413, 415, 421, 423, 425, 431, 433, and 435 included in the captured videos. For example, the some frames 411, 413, 415, 421, 425, and 431 in Table 3 may be frames not excluded (or removed) from one track through post-processing among the frames 411, 413, 415, 421, 423, 425, 431, 433, and 435 included in the captured videos. In an embodiment, the electronic device 201 may remove (or exclude) a frame not associated with at least one event from one track. In an embodiment, the electronic device 201 may not remove (or exclude) a frame associated with at least one event from one track. In an embodiment, as the some frames 411, 413, 415, 421, 425, and 431 among the frames 411, 413, 415, 421, 423, 425, 431, 433, and 435 included in the captured videos are included in one track, the number of frames included in each of samples may be different.

**[Table 3]**

| Version | | 2 | 2 | 2 |
|---|---|---|---|---|
| Sample ID | | 1 | 2 | 3 |
| Timestamp diff | | 33 milliseconds | 34 milliseconds | 32 milliseconds |
| # Of samples | | 3 | 1 | 2 |
| Field set 531 | Camera ID | 0 | 0 | 0 |
| | Timestamp diff correction | 0 | 0 | 0 |
| | Offset | 1000 | 2280 | 2530 |
| | Size | 480 | 250 | 370 |
| | Camera info | FIRST INFO | FIRST INFO | FIRST INFO |
| Field set 535 | Camera ID | 1 | | 1 |
| | Timestamp diff correction | 2 | | 1 |
| | Offset | 1480 | | 2900 |
| | Size | 500 | | 470 |
| | Camera info | SECOND INFO | | SECOND INFO |
| Field set 539 | Camera ID | 2 | | |
| | Timestamp diff correction | 3 | | |
| | Offset | 1980 | | |
| | Size | 300 | | |
| | Camera info | THIRD INFO | | |

For example, referring to Table 3, the electronic device 205 may display the first frame on the display 265 for 33 milliseconds that are a time length indicated by the timestamp diff field, based on at least one frame of data (or the frame 411) from the start position 1000 indicated by the offset field to a position 1479 according to the length 480 indicated by the size field, data (or the frame 421) from the start position 1480 indicated by the offset field to a position 1979 according to the length 500 indicated by the size field, or data (or the frame 431) from the start position 1980 indicated by the offset field to a position 2279 according to the length 300 indicated by the size field.

For example, referring to Table 3, the electronic device 205 may display the second frame on the display 265 for 34 milliseconds that are a time length indicated by the timestamp diff field, based on data (or the frame 413) from the start 2280 indicated by the position offset field to a position 2529 according to the length 250 indicated by the size field.

For example, referring to Table 3, the electronic device 205 may display the third frame on the display 265 for 32 milliseconds that are a time length indicated by the timestamp diff field, based on at least one frame of data (or the frame 415) from the start position 2530 indicated by the offset field to a position 2899 according to the length 370 indicated by the size field, or data (or the frame 425) from the start position 2900 indicated by the offset field to a position 3369 according to the length 470 indicated by the size field.

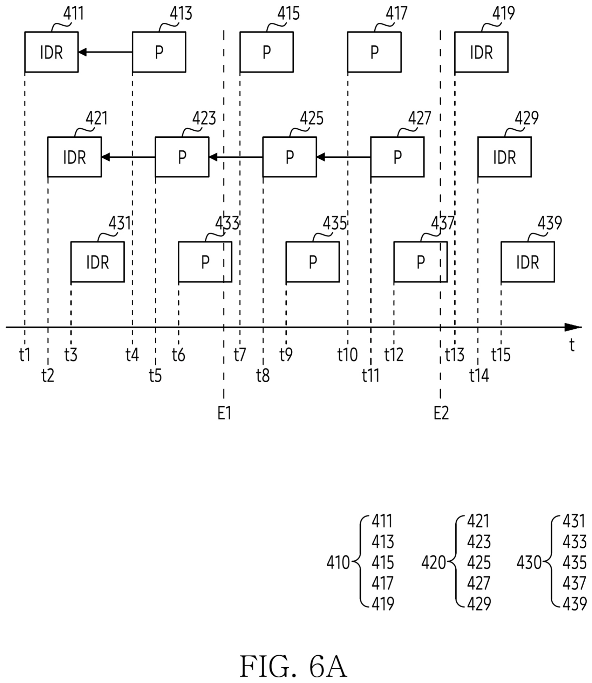

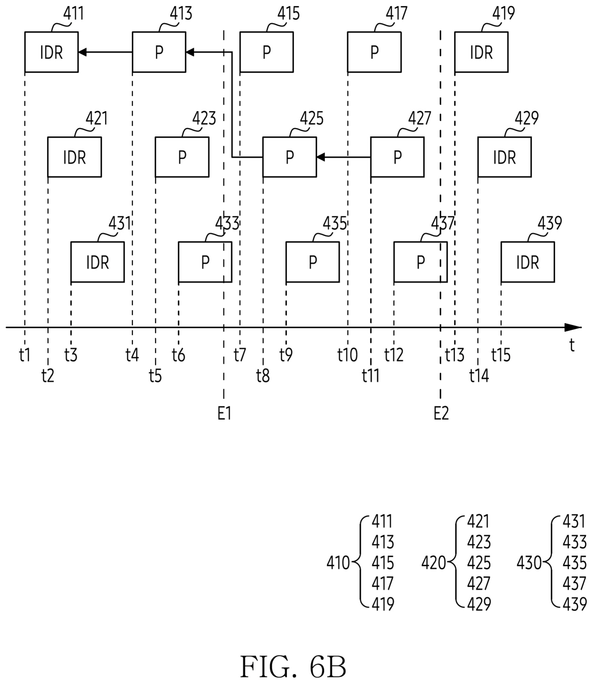

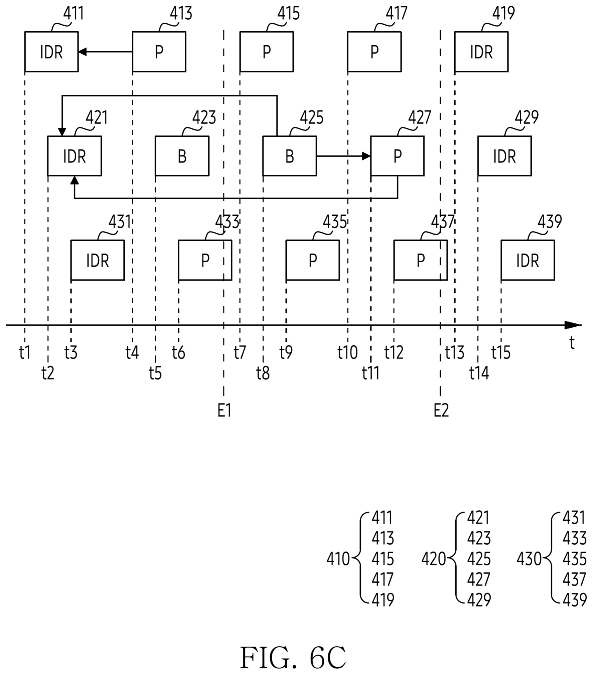

FIGS. 6A, 6B, and 6C illustrate an example of a decoding order of frames according to an event, according to an embodiment.

FIGS. 6A, 6B, and 6C may be described with reference to FIG. 1, 2A, 2B, 3A, 3B, 3C, 4A, 4B, 4C, 5A, and 5B.

In an embodiment, an electronic device 205 may play videos 410, 420, and 430 based on video data (the video data 501 of FIG. 5A). In an embodiment, the electronic device 205 may play the videos 410, 420, and 430 based on a video track 401 included in the video data 501. For example, the electronic device 205 may determine frames indicated by a timed meta track box (the timed meta track box 590 of FIG. 5A) among frames of the videos 410, 420, and 430 included on the video track 401. For example, the electronic device 205 may display frames indicated by the timed meta track box 590 through a display 265 in an order of a timestamp number. For example, in a case that the timed meta track box 590 indicates frames 411, 413, 425, 427, and 419 as a frame to be played, the electronic device 205 may display the frames 411, 413, 425, 427, and 419 through the display 265 in an order of a timestamp number.

In an embodiment, the electronic device 205 may decode the frames 411, 413, 425, 427, and 419 to play the frames 411, 413, 425, 427, and 419. In an embodiment, the electronic device 205 may further decode frames other than a frame to be played according to types of the frames 411, 413, 425, 427, and 419. For example, in a case that the frames 411, 413, 425, 427, and 419 refer to a frame other than a frame to be played, the electronic device 205 may decode the referenced frame.

Referring to FIGS. 6A and 6B, frames 411, 421, 431, 419, 429, and 439 may be an instantaneous decoder refresh (IDR) frame. In an embodiment, the frames 411, 421, 431, 419, 429, and 439 that are the IDR frame may be decoded without referencing another frame. In an embodiment, frames between the IDR frame and a prediction (P) frame before a next IDR frame may configure one group of pictures (GOP). For example, frames 411, 413, 415, and 417 may configure one GOP.

In an embodiment, frames 413, 415, 417, 423, 425, 427, 433, 435, and 437 may be a prediction (P) frame. In an embodiment, the P frame may be decoded with reference to a previous P frame and/or an IDR frame. In an embodiment, the P frame may be decoded with reference to the previous P frame and/or IDR frame in its GOP. For example, the frame 413 may be decoded with reference to the frame 411. For example, the frame 415 may be decoded with reference to the frame 411 and the frame 413. For example, the frame 415 may be decoded with reference to the frame 413 decoded with reference to the frame 411.

Referring to FIG. 6A, the electronic device 205 may further decode the frames 421 and 423 that are not played to play the frames 411, 413, 425, 427, and 419. For example, the electronic device 205 may decode the frame 411 and play the decoded frame 411. For example, the electronic device 205 may decode the frame 413 with reference to the frame 411, and play the decoded frame 413. For example, the electronic device 205 may decode the frame 421 to play the frame 425, and decode the frame 423 with reference to the decoded frame 421. For example, the electronic device 205 may decode the frame 425 with reference to the decoded frame 423, and play the decoded frame 425. For example, the electronic device 205 may decode the frame 427 with reference to the decoded frame 425, and play the decoded frame 427. For example, the electronic device 205 may decode the frame 419 and play the decoded frame 419.

In FIG. 6A, the electronic device 205 may decode the frames 411, 413, 425, 427, and 419 in an order of the frame 411, the frame 413, the frame 421, the frame 423, the frame 425, the frame 427, and the frame 419 to play the frames 411, 413, 425, 427, and 419. In an embodiment, the electronic device 201 may play the frames 411, 413, 425, 427, and 419 at a playback time according to values of a timestamp diff field and a timestamp diff correction field of each of the frames 411, 413, 425, 427, and 419.

In an embodiment, the electronic device 205 may decode a frame to be played with reference to another frame other than frames in the same GOP. For example, when decoding a first frame included in any one video of the videos 410, 420, and 430, the electronic device 205 may refer to a second frame included in another video. Herein, the first frame may have a timestamp number next to the second frame. For example, the electronic device 205 may decode the frames 421, 423, 425, 427, and 429 included in the video 420 with reference to the frames 411, 413, 415, 417, and 419 included in the video 410. For example, the electronic device 205 may decode the frames 431, 433, 435, 437, and 439 included in the video 430 with reference to the frames 411, 413, 415, 417, and 419 included in the video 410. However, it is not limited thereto. For example, the electronic device 205 may decode the frame 425 with reference to the frame 413.

In an embodiment, the electronic device 205 may adjust a resolution of the second frame included in another video for decoding the first frame included in any one video of the videos 410, 420, and 430. In an embodiment, the electronic device 205 may up-scale or down-scale a resolution of an area corresponding to an area of the first frame among areas of the second frame for decoding the first frame. For example, in a case of the frames as in FIG. 3A, in a case that the first frame is the frame 310 and the second frame is the frame 330, the electronic device 205 may up-scale an area corresponding to the frame 330 in the frame 310, and decode the frame 330 with reference to the area of the upscaled frame 310. For example, in a case of the frames as in FIG. 3A, in a case that the first frame is the frame 310 and the second frame is the frame 320, the electronic device 205 may down-scale an area corresponding to the frame 320 in the frame 310, and decode the frame 320 with reference to the area of the downscaled frame 310.

Referring to FIG. 6B, the electronic device 205 may decode the frame 421 to play the frame 425, and decode the frame 423 with reference to the decoded frame 421. In an embodiment, the electronic device 205 may adjust a resolution of the frame 413 and decode the frame 425 with reference to the frame 413 having the adjusted resolution. In a case of FIG. 6B, as compared with FIG. 6A, the decoding of the frames 421 and 423 may not be required for playing the frame 425.

In FIG. 6B, the electronic device 205 may decode the frames 411, 413, 425, 427, and 419 in an order of the frame 411, the frame 413, the frame 425, the frame 427, and the frame 419 to play the frames 411, 413, 425, 427, and 419. In an embodiment, the electronic device 205 may adjust the resolution of the frame 413, which is a previous frame, for decoding the frame 425. In an embodiment, the electronic device 201 may play the frames 411, 413, 425, 427, and 419 at a playback time according to values of the timestamp diff field and the timestamp diff correction field of each of the frames 411, 413, 425, 427, and 419.

Referring to FIG. 6C, the frames 411, 421, 431, 419, 429, and 439 may be the IDR frame. The frames 413, 415, 417, 427, 433, 435, and 437 may be the P frame. The frames 423 and 425 may be a bi-directional prediction (B) frame. In an embodiment, the B frame may be decoded with reference to a subsequent P frame and/or a preceding IDR frame. In an embodiment, the B frame may be decoded with reference to the subsequent B or P frame and/or the preceding IDR frame in its GOP. For example, the frame 425, which is the B frame, may be decoded with reference to the frame 421 and the frame 427. For example, the frame 425 may be decoded with reference to the decoded frame 427 with reference to the frame 421. For example, the frame 423, which is the B frame, may be decoded with reference to the frame 421 and the frame 425.

Referring to FIG. 6C, the electronic device 205 may decode the frame 421 to play the frame 425, and decode the frame 427 with reference to the decoded frame 421. In a case of FIG. 6C, as compared with FIGS. 6A and 6B, it may be required for decoding the frame 427 before decoding the frame 425 to play the frame 425.

In FIG. 6C, the electronic device 205 may decode the frames 411, 413, 425, 427, and 419 in an order of the frame 411, the frame 413, the frame 421, the frame 427, the frame 425, and the frame 419 to play the frames 411, 413, 425, 427, and 419. In an embodiment, the electronic device 205 may first decode the frame 427 having a timestamp later than the frame 425. The timestamp diff correction field for the frame 425 may further include information (or a CTTS) for correcting a time difference between a decoding time point and a playback time point (or a composition time). In an embodiment, the electronic device 201 may play the frames 411, 413, 425, 427, and 419 at the playback time according to the values of the timestamp diff field and the timestamp diff correction field of each of the frames 411, 413, 425, 427, and 419.

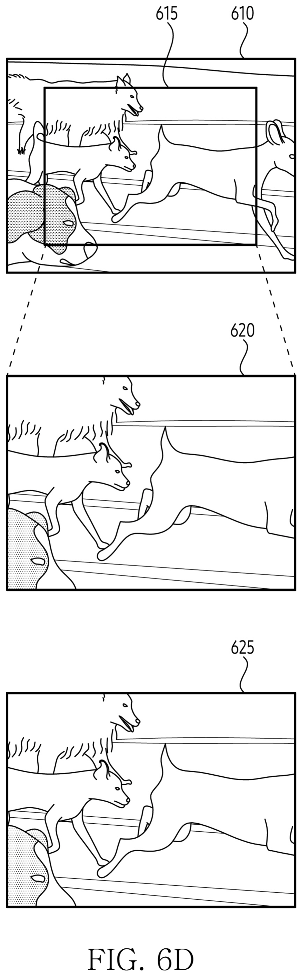

FIG. 6D illustrates an example of an operation of decoding with reference to a frame of another video, according to an embodiment.

FIG. 6D may be described with reference to FIGS. 1, 2A, 2B, 3A, 3B, 3C, 4A, 4B, 4C, 5A, 5B, and 6B.

In an embodiment, when decoding a frame 625 included in any one video of videos 410, 420, and 430, an electronic device 205 may refer to a frame 610 included in another video. For example, the frame 610 may be the frame 413 of FIG. 6B. For example, the frame 625 may be the frame 425 of FIG. 6B. For example, the frame 625 may be a frame obtained by a telephoto camera, and the frame 610 may be a frame obtained by a wide-angle camera. Herein, the frame 625 may have a timestamp number next to the frame 610.

In an embodiment, the electronic device 205 may adjust a resolution of the frame 610 included in the other video for decoding the frame 625 included in a specific video. In an embodiment, the electronic device 205 may up-scale or down-scale a resolution of an area 615 corresponding to an area of the frame 625 among areas of the frame 610 for decoding the frame 625. In an embodiment, the electronic device 205 may adjust the resolution of the area 615 corresponding to the frame 625 of the frame 610 and decode the frame 625 with reference to a frame 620 having the adjusted resolution in order to play the frame 625 after playing the frame 610. For example, the electronic device 205 may up-scale the area 615 corresponding to the frame 625 in the frame 610 and decode the frame 625 with reference to the frame 620 up-scaled from the area 615.

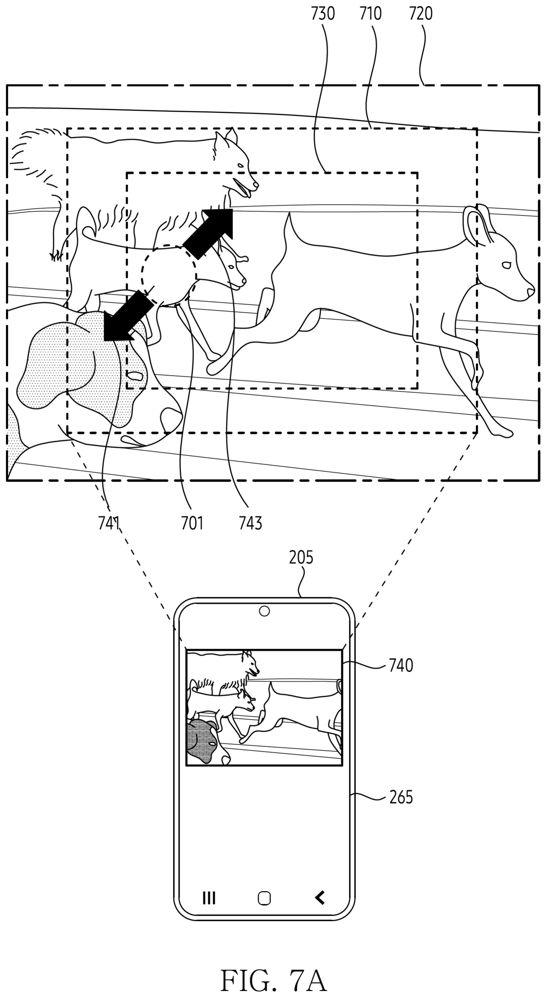

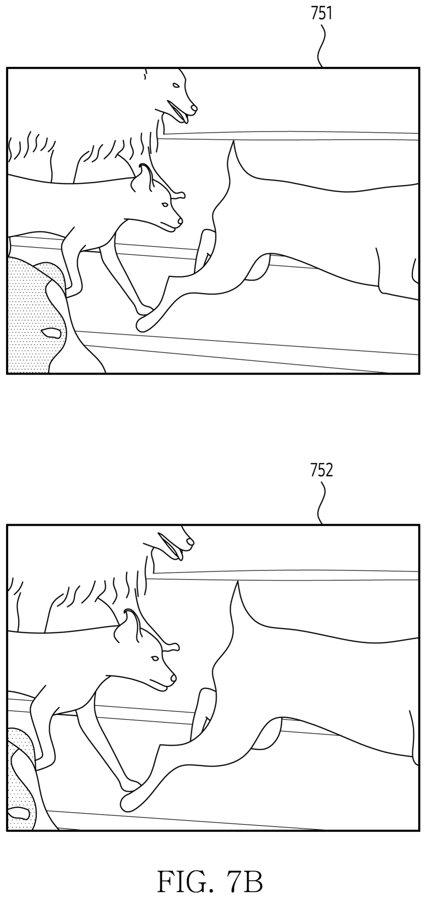

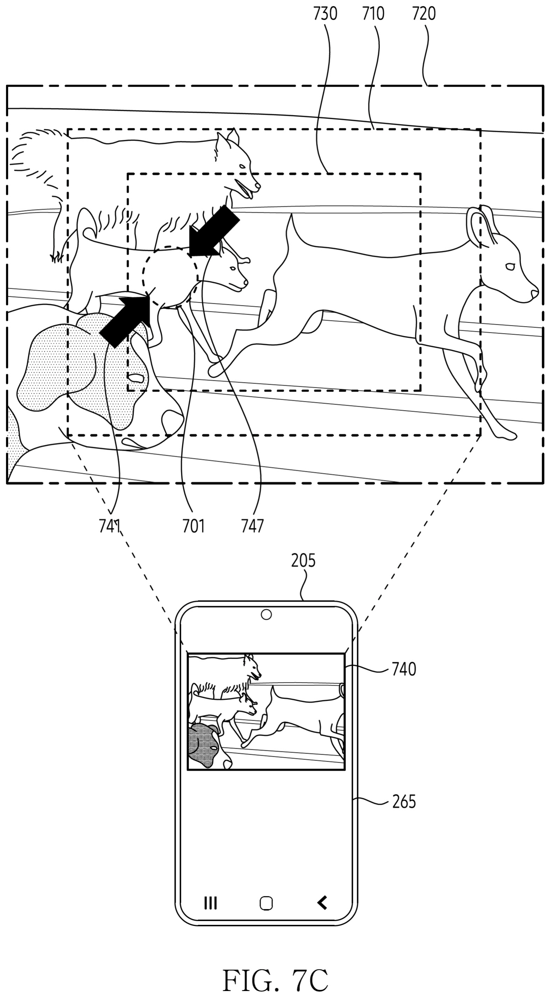

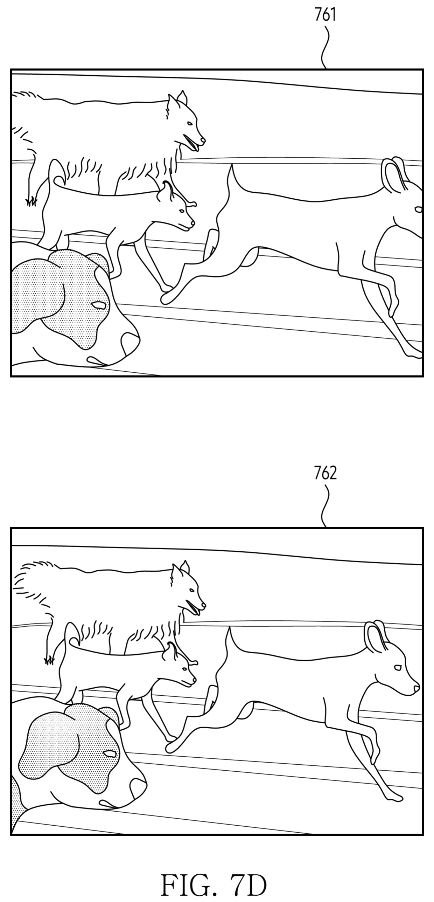

FIG. 7A illustrates an example of a frame of video data played by an electronic device, according to an embodiment. FIG. 7B illustrates an example of frames of video data played by an electronic device, according to an embodiment. FIG. 7C illustrates an example of a frame of video data played by an electronic device, according to an embodiment. FIG. 7D illustrates an example of frames of video data played by an electronic device, according to an embodiment.

FIGS. 7A, 7B, 7C, and 7D may be described with reference to FIGS. 1, 2A, 2B, 3A, 3B, 3C, 4A, 4B, 4C, 5A, and 5B.

Referring to FIGS. 7A and 7C, an electronic device 205 may play video data 501. In an embodiment, the electronic device 205 may play videos 410, 420, and 430 based on a video track 401 included in the video data 501. For example, the electronic device 205 may display frames indicated by a timed meta track box 590 among frames of the videos 410, 420, and 430 included on the video track 401 through a display 265 in an order of a timestamp number. In an embodiment, the electronic device 205 may display a frame 710 indicated by the timed meta track box 590 among frames 710, 720, and 730 having the same timestamp number on a playback area 740 of the display 265.

The electronic device 205 may identify at least one event while playing the video data 501. For example, the at least one event may include identification of an input for a user control of a video being played. For example, the at least one event may be associated with a playback image. For example, the at least one event may include identification of an input requesting a change (or a switch) of a source video (or a source camera) to display the playback image among the videos 410, 420, and 430.

Referring to FIG. 7A, the electronic device 205 may identify an event 701 for zoom-in. For example, the electronic device 205 may identify the event 701 for zoom-in based on touch inputs 741 and 743 to the display 265 moving away from each other. However, it is not limited thereto. The electronic device 205 may identify the event 701 for zoom-in based on another input (e.g., a touch input to a zoom-in button and a voice input requesting zoom-in) requesting zoom-in.

In an embodiment, the electronic device 205 may change a source video of a playback image displayed through the display 265 according to magnification according to the zoom-in by the event 701.

For example, in a case that the magnification according to the zoom-in by the event 701 is within a reference magnification range (e.g., more than 0.8 times and less than 3 times), the electronic device 205 may not change the source video of the playback image displayed through the display 265 from the video 410 obtained by a first camera 281. Referring to FIG. 7B, in a case that the magnification according to the zoom-in by the event 701 is within the reference magnification range (e.g., more than 0.8 times and less than 3 times), the electronic device 205 may display an image 751 in which a partial area of the frame 710 is enlarged through the display 265.

For example, in a case that the magnification according to the zoom-in by the event 701 is out of the reference magnification range (e.g., 3 times or more), the electronic device 205 may change the source video of the playback image displayed through the display 265 from the video 410 obtained by the first camera 281 to the video 420 obtained by a second camera 283. Referring to FIG. 7B, in a case that the magnification according to the zoom-in by the event 701 exceeds the reference magnification range (e.g., 3 times or more), the electronic device 205 may display an image 752 based on the frame 730 other than the frame 710 through the display 265. In an embodiment, the electronic device 205 may select a frame of the video 410 obtained by the first camera 281 and a frame of the video 420 obtained by the second camera 283 as frames to be played simultaneously for a smooth switch from the video 410 obtained by the first camera 281 to the video 420 obtained by the second camera 283. In an embodiment, the electronic device 205 may play one frame based on the frame of the video 410 obtained by the first camera 281 and the frame of the video 420 obtained by the second camera 283. Herein, one frame being based on the frame of the video 410 obtained by the first camera 281 and the frame of the video 420 obtained by the second camera 283 may mean that the one frame has an intermediate value of frames. One frame being based on the frame of the video 410 obtained by the first camera 281 and the frame of the video 420 obtained by the second camera 283 may mean that the one frame is a weighted average frame of frames.

In FIGS. 7A and 7B, it is exemplified the event 701 for zoom-in is generated by an input of a user, but it is merely an example. According to an embodiment, the event 701 for zoom-in may be an event recorded in the timed meta track box 590.

Referring to FIG. 7C, the electronic device 205 may identify an event 707 for zoom-out. For example, the electronic device 205 may identify the event 707 for zoom-out based on touch inputs 745 and 747 to the display 265 approach each other. However, it is not limited thereto. The electronic device 205 may identify the event 707 for zoom-out based on another input (e.g., a touch input to a zoom-out button and a voice input requesting zoom-out) requesting zoom-out.

In an embodiment, the electronic device 205 may change the source video of the playback image displayed through the display 265 according to magnification according to zoom-out by an event 703.

For example, in a case that the magnification according to the zoom-out by the event 703 is within the reference magnification range (e.g., more than 0.8 times and less than 3 times), the electronic device 205 may not change the source video of the playback image displayed through the display 265 from the video 410 obtained by the first camera 281. Referring to FIG. 7D, in a case that the magnification according to the zoom-out by the event 703 is within the reference magnification range (e.g., more than 0.8 times and less than 3 times), the electronic device 205 may display an image 761 in which the frame 710 is reduced on the display 265.

For example, in a case that the magnification according to the zoom-out by the event 703 is out of the reference magnification range (e.g., 0.8 times or less), the electronic device 205 may change the source video of the playback image displayed through the display 265 from the video 410 obtained by the first camera 281 to the video 430 obtained by the third camera 285. Referring to FIG. 7D, in a case that the magnification according to the zoom-out by the event 703 is out of the reference magnification range (e.g., 0.8 times or less), the electronic device 205 may display an image 762 based on the frame 720 other than the frame 710 through the display 265.

In FIGS. 7C and 7D, the event 707 for zoom-out has been exemplified as being generated by the input of the user, but it is merely an example. According to an embodiment, the event 707 for zoom-out may be an event recorded in the timed meta track box 590.

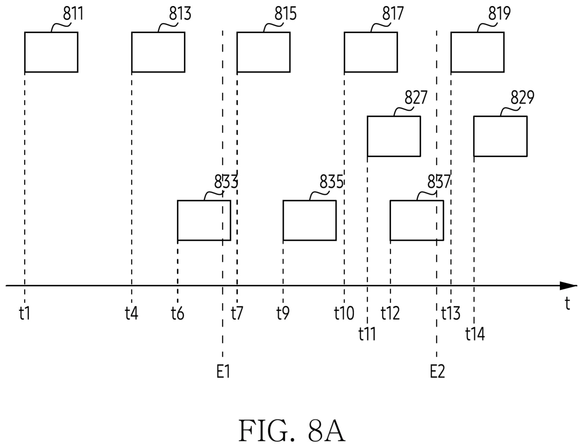

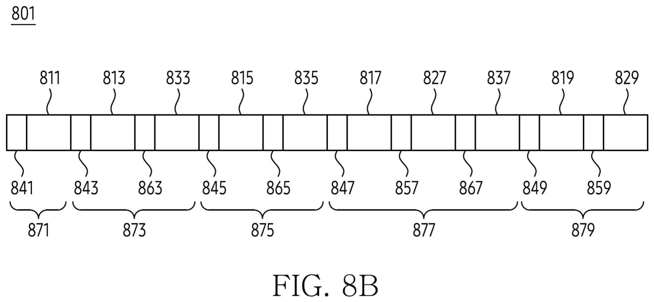

FIG. 8A illustrates an example of frames obtained via a plurality of cameras, according to an embodiment. FIG. 8B illustrates an example of an order of frames, according to an embodiment.

FIGS. 8A and 8B may be described with reference to FIG. 1, 2A, 3A, 3B, 3C, 4A, 4B, and 5A.

Compared with FIG. 4A, in FIG. 8A, some cameras (e.g., a first camera 281) among cameras 281, 283, and 285 may obtain a video including frames 811, 813, 815, 817, and 819 corresponding to a length (i.e., a total playback time) of timestamps, and some other cameras (e.g., a second camera 283 and a third camera 285) may obtain a video including frames 827, 829, 833, 835, and 837 corresponding to a length shorter than a length (i.e., a total playback time) of timestamps. For example, the second camera 283 may obtain a video including the frames 827 and 829 corresponding to a length shorter than a length (i.e., a total playback time) of timestamps of a video captured by the first camera 281. For example, the third camera 285 may obtain a video including the frames 833, 835, and 837 corresponding to a length shorter than a length (i.e., a total playback time) of the timestamps of the video captured by the first camera 281. However, it is not limited thereto. A video obtained via each of the cameras 281, 283, and 285 may all be shorter than the length (i.e., the total playback time) of the timestamps. Herein, the total playback time may be a sum of timestamp diffs for frames included in a video track 541 of video data 501. For example, the total playback time may be a sum of timestamp diffs for each of sample IDs in the video track 541 of the video data 501. For example, in a case that the video data 501 includes a 10-second video obtained at 30 FPS, 600 sample IDs for frames included in the video track 541 may be included, and the number of frames may be 600 or more. For example, one or more frames obtained via at least one camera of the plurality of cameras 281, 283, and 285 may be included for one sample ID.

For example, the electronic device 201 may obtain a video including frames corresponding to the length (i.e., the total playback time) of the timestamps via each of the cameras 281, 283, and 285. Thereafter, the electronic device 201 may remove (or exclude) some of the frames included in the videos obtained via the cameras 281, 283, and 285 from a video track 801.

In an embodiment, while obtaining videos via the cameras 281, 283, and 285, the electronic device 201 may remove (or exclude) frames, except for frames obtained by the first camera 281 that provides a source video of a preview image, from among frames obtained during an interval in which at least one event E1 and/or E2 is not identified from the video track 801. In an embodiment, the electronic device 201 may remove (or exclude) a frame not associated with the at least one event E1 and/or E2 from the video track 801 to lighten a video track 401. In an embodiment, the frame removed (or excluded) from the video track 801 may be a frame not associated with the event and/or a frame not provided as the preview image.

In an embodiment, while obtaining videos via the cameras 281, 283, and 285, the electronic device 201 may remove (or exclude) some of the frames included in the videos from the video track 801 based on the identified at least one event E1 and/or E2. A frame that is not removed (or excluded) from the video track 801 may be a frame associated with the event and/or a frame provided as the preview image. Herein, among frames of a source video before the event, a frame neighboring a time point at which the event occurs may be recognized as being associated with the event. Among frames of a source video after the event, a frame neighboring to the time point at which the event occurs may be recognized as being associated with the event. Some frames removed (or excluded) from the video track 801 may be frames not associated with the event. A frame included in a source video different from the source videos before or after the event may be recognized as not being associated with the event. In an embodiment, the electronic device 201 may remove (or exclude) the frame not associated with the at least one event E1 and/or E2 from the video track 801 to lighten the video track 401. In an embodiment, the electronic device 201 may not remove (or exclude) a frame within a predetermined time from the time point at which the at least one event E1 and/or E2 occurs from the video track 801 for a smooth switch between source videos according to the at least one event E1 and/or E2.

For example, in a case that a source video before the event E1 is a video obtained by the first camera 281 and a source video after the event E1 is a video obtained by the third camera 285, the electronic device 201 may not remove (or exclude) the frames 833 and 835 adjacent to the event E1 from the video track 801. For example, in a case that the source video before the event E1 is the video obtained by the first camera 281 and the source video after the event E1 is the video obtained by the third camera 285, the electronic device 201 may remove (or exclude) the frames 827 and 829 adjacent to the event E1 from the video track 801 among frames included in a video obtained by the second camera 283.

For example, in a case that a source video before the event E2 is a video obtained by the third camera 285 and a source video after the event E2 is a video obtained by the second camera 283, the electronic device 201 may not remove (or exclude) the frames 827, 829, and 837 adjacent to the event E2 from the video track 801.

The number of frames included in the video track 801 may be different according to the occurrence time point of the at least one event E1 and/or E2. For example, the electronic device 201 may not remove frames within a designated time length from the video track 801 from the occurrence time point of the at least one event E1 and/or E2 for post-editing of the video data 501. For example, the electronic device 201 may not remove frames associated with the at least one event E1 and/or E2 within the designated time length from the occurrence time point of the at least one event E1 and/or E2 from the video track 801. Herein, a frame included in the source video before or at least after the at least one event E1 and/or E2 may be recognized as being associated with the at least one event E1 and/or E2.

In an embodiment, referring to FIG. 8B, the electronic device 201 may allocate timestamp numbers to frames obtained via sub-cameras (e.g., the frames 827 and 829 obtained via the second camera 283, and the frames 833, 835, and 837 obtained via the third camera 285) based on timestamp numbers 871, 873, 875, 877, and 879 of the frames 811, 813, 815, 817, and 819 obtained via a main camera (e.g., the first camera 281). In an embodiment, the one video track 801 of video data may include headers 841, 843, 845, 847, 849, 857, 859, 863, 865, and 867 for the frames 811, 813, 815, 817, 819, 827, 829, 833, 835, and 837.

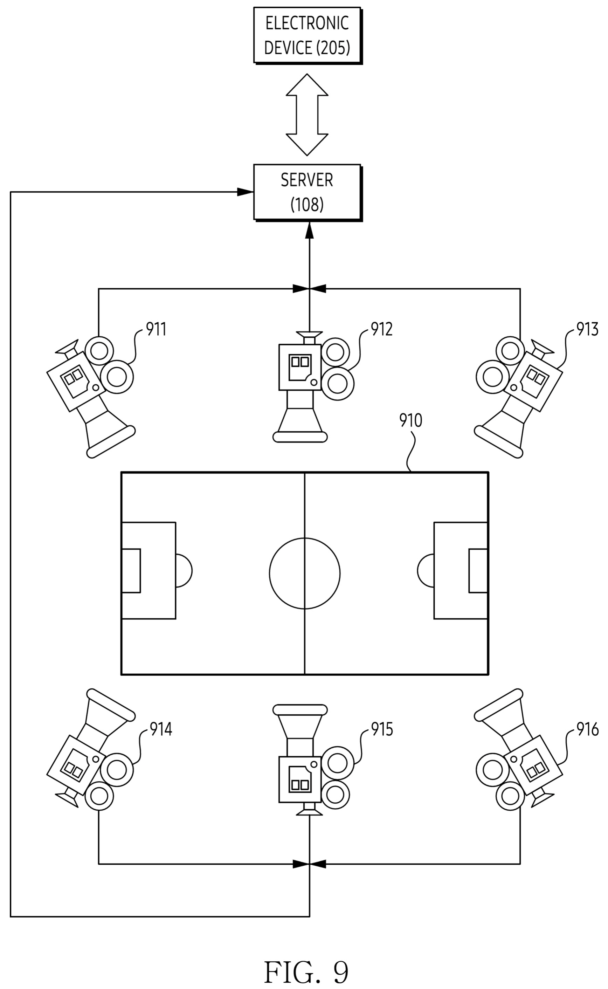

FIG. 9 illustrates an example of a plurality of cameras having different fields of view, according to an embodiment.

Referring to FIG. 9, cameras 911, 912, 913, 914, 915, and 916 may be disposed to capture a specific space (e.g., a stadium 910).

In an embodiment, a server 108 may be electrically connected with the cameras 911, 912, 913, 914, 915, and 916.

In an embodiment, the server 108 may synchronize the cameras 911, 912, 913, 914, 915, and 916. In an embodiment, the server 108 may synchronize capturing of the cameras 911, 912, 913, 914, 915, and 916.

In an embodiment, the server 108 may set any one camera (e.g., the camera 911) of the cameras 911, 912, 913, 914, 915, and 916 as a main camera. In an embodiment, the server 108 may set other cameras of the cameras 911, 912, 913, 914, 915, and 916 as sub-cameras.

In an embodiment, the server 108 may generate video data in which frames obtained via the cameras 911, 912, 913, 914, 915, and 916 are arranged on one video track. In an embodiment, the server 108 may generate video data in which the frames obtained via the cameras 911, 912, 913, 914, 915, and 916 are disposed to be adjacent to frames obtained via the main camera. In an embodiment, the server 108 may generate video data in which the frames obtained via the cameras 911, 912, 913, 914, 915, and 916 are disposed on one video track according to an order of a timestamp.

For example, the server 108 may transmit video data in which frames are arranged on one video track to an electronic device 205. The electronic device 205 may play videos obtained via the cameras 911, 912, 913, 914, 915, and 916 based on the video data from the server 108. For example, the electronic device 205 may play a video by switching a camera selected by an event among the cameras 911, 912, 913, 914, 915, and 916.

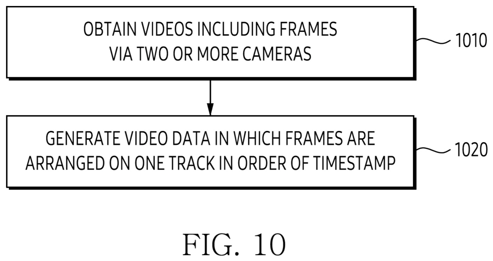

FIG. 10 is a flowchart indicating an operation of an electronic device according to an embodiment.

FIG. 10 may be described with reference to FIGS. 1, 2A, 3A, 3B, 3C, 4A, 4B, and 5A.

Referring to FIG. 10, in operation 1010, an electronic device 201 may obtain videos 410, 420, and 430 including frames via two or more cameras 281, 283, and 285. The electronic device 201 may obtain the video 410 including frames 411, 413, 415, 417, and 419 via a first camera 281. For example, the first camera 281 may obtain the video 410 including the frames 411, 413, 415, 417, and 419 based on a capturing command from a processor 221 of the electronic device 201. The electronic device 201 may obtain the video 420 including frames 421, 423, 425, 427, and 429 via a second camera 283. For example, the second camera 283 may obtain the video 420 including the frames 421, 423, 425, 427, and 429 based on a capturing command from the processor 221 of the electronic device 201. The electronic device 201 may obtain the video 430 including frames 431, 433, 435, 437, and 439 via a third camera 285. For example, the third camera 285 may obtain the video 430 including the frames 431, 433, 435, 437, and 439 based on a capturing command from the processor 221 of the electronic device 201.

In operation 1020, the electronic device 201 may generate video data 501 in which the frames 411, 413, 415, 417, 419, 421, 423, 425, 427, 429, 431, 433, 435, 437, and 439 are arranged on one video track 401 in an order of timestamp numbers 471, 473, 475, 477, and 479.

In an embodiment, the electronic device 201 may generate video data to include the frames 411, 413, 415, 417, 419, 421, 423, 425, 427, 429, 431, 433, 435, 437, and 439 on the one video track 401. In an embodiment, the electronic device 201 may generate video data including the one video track 401 in which the frames 411, 413, 415, 417, 419, 421, 423, 425, 427, 429, 431, 433, 435, 437, and 439 are arranged in a playback order. For example, the frames being arranged in a playback order may mean that the frames 411, 413, 415, 417, 419, 421, 423, 425, 427, 429, 431, 433, 435, 437, and 439 are arranged according to an order of a timestamp (or a playback time and a presentation time). As the frames are arranged in a playback order, frames included in another video may be inserted between frames included in one video.

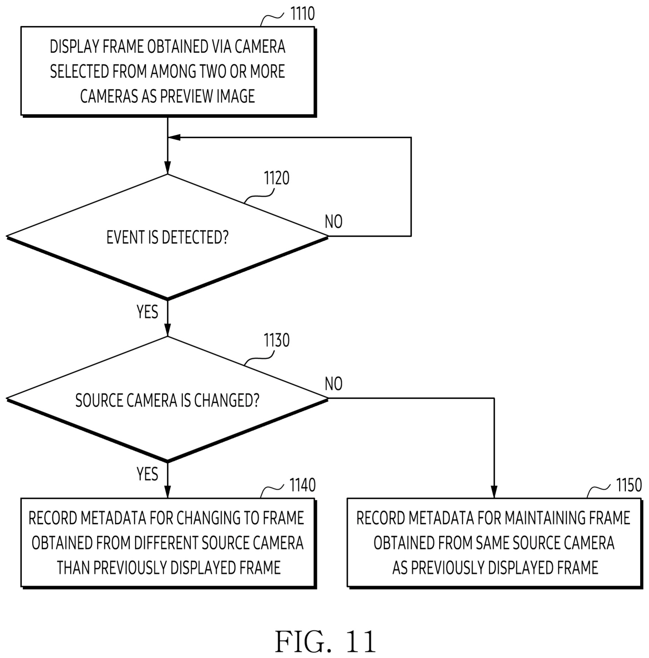

FIG. 11 is a flowchart indicating an operation of an electronic device according to an embodiment.

FIG. 11 may be described with reference to FIGS. 1, 2A, 3A, 3B, 3C, 4A, 4B, and 5A.

Referring to FIG. 11, in operation 1110, an electronic device 201 may display a frame obtained via a camera selected from among two or more cameras 281, 283, and 285 as a preview image. For example, the electronic device 201 may display a frame obtained via a main camera (e.g., the first camera 281) among the two or more cameras 281, 283, and 285 as a preview image on a display 261.

In operation 1120, the electronic device 201 may determine whether events E1 and E2 are detected. In an embodiment, the electronic device 201 may identify at least one event E1 and/or E2 while obtaining videos 410, 420, and 430 via the cameras 281, 283, and 285. For example, the at least one event E1 and/or E2 may include identification of an input for a user control of a video being captured. For example, the at least one event E1 and/or E2 may be associated with a preview image. For example, the at least one event E1 and/or E2 may include identification of an input requesting a change (or a switch) of a source camera (or a source video) for displaying the preview image among the cameras 281, 283, and 285.

In the operation 1120, in a case that the events E1 and E2 are detected, the electronic device 201 may perform operation 1130. In the operation 1120, in a case that the events E1 and E2 are not detected, the electronic device 201 may perform the operation 1120 again.

In the operation 1130, the electronic device 201 may determine whether a change of the source camera is required. In an embodiment, the electronic device 201 may determine whether a change of the source camera is required by the at least one event E1 and/or E2.

For example, in a case of the zoom-in event E1, the electronic device 201 may determine that a change of the source camera is required, when magnification according to zoom-in is out of a designated range (e.g., more than 0.8 times and 3 times). For example, in a case of the zoom-in event E1, the electronic device 201 may determine that a change of the source camera is not required, when that the magnification according to the zoom-in is within the designated range. For example, in a case of the zoom-out event E2, the electronic device 201 may determine that a change of the source camera is required, when magnification according to zoom-out is out of a designated range (e.g., more than 0.8 times and 3 times). For example, in the case of the zoom-out event E2, the electronic device 201 may determine that a change of the source camera is not required, when the magnification according to the zoom-out is within the designated range.

In the operation 1130, in a case that a change of the source camera is required, the electronic device 201 may perform operation 1140. In the operation 1130, in a case that a change of the source camera is not required, the electronic device 201 may perform operation 1150 again.

In the operation 1140, the electronic device 201 may record metadata for changing to a frame obtained from a different source camera than a previously displayed frame. The electronic device 201 may record information for changing to the frame obtained from the different source camera than the previously displayed frame in a timed meta track box 590. In an embodiment, the electronic device 201 may store information (e.g., a camera ID, and/or a sample ID) on a frame to be played according to the at least one event E1 and/or E2 in the timed meta track box 590. In an embodiment, the electronic device 201 may store, in the timed meta track box 590, information on an input requesting a change (or a switch) of the source camera (or a source video) for displaying the preview image among the cameras 281, 283, and 285. Herein, the change (or the switch) of the source camera (or the source video) may include a zoom-in, zoom-out, and/or a switch of the camera.

In the operation 1150, the electronic device 201 may record metadata for maintaining a frame obtained from the same source camera as a previously displayed frame. The electronic device 201 may record information for maintaining the frame obtained from the same source camera as the previously displayed frame in the timed meta track box 590. In an embodiment, the electronic device 201 may store information (e.g., a camera ID, and/or a sample ID) on a frame to be played according to the at least one event E1 and/or E2 in the timed meta track box 590. In an embodiment, the electronic device 201 may store information indicating maintenance of the source camera (or the source video) for displaying the preview image among the cameras 281, 283, and 285 in the timed meta track box 590. For example, the timed meta track box 590 may indicate the maintenance of the source camera (or the source video) as metadata for frames having different sample IDs indicates the same camera ID.

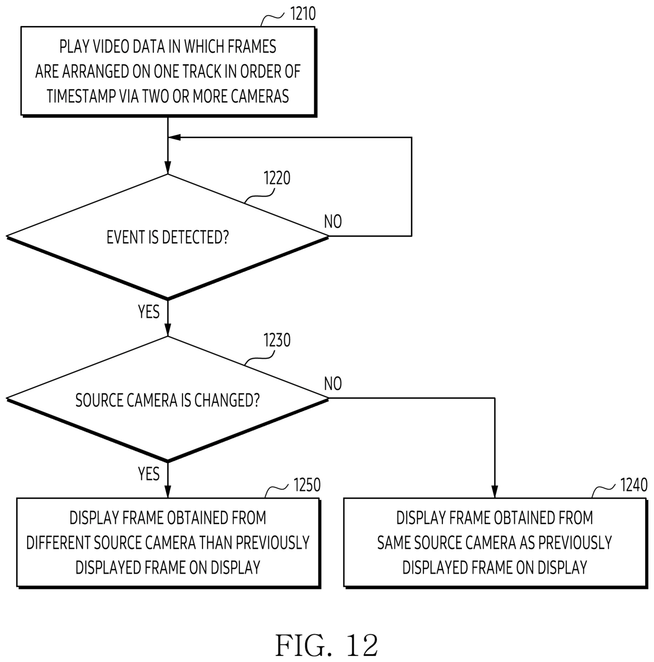

FIG. 12 is a flowchart indicating an operation of an electronic device according to an embodiment.

FIG. 12 may be described with reference to FIGS. 1, 2A, 3A, 3B, 3C, 6A, 6B, 6C, 7A, 7B, 7C, and 7D.

Referring to FIG. 12, in operation 1210, an electronic device 205 may play video data 501 in which frames obtained via two or more cameras 281, 283, and 285 are arranged on one video track 401 in an order of a timestamp. For example, the electronic device 205 may display frames indicated by a timed meta track box 590 among frames of videos 410, 420, and 430 included on the video track 401 through a display 265 in an order of a timestamp number. In an embodiment, the electronic device 205 may display a frame 710 indicated by the timed meta track box 590 among frames 710, 720, and 730 having the same timestamp number on a playback area 740 of the display 265.

In operation 1220, the electronic device 205 may determine whether events 701 and 703 are detected. The electronic device 205 may identify at least one event while playing the video data 501. For example, the at least one event may include identification of an input for a user control of a video being played. For example, the at least one event may be associated with a playback image. For example, the at least one event may include identification of an input requesting a change (or a switch) of a source video (or a source camera) for displaying the playback image among the videos 410, 420, and 430.

In an embodiment, the events 701 and 703 may be events recorded in the timed meta track box 590 of the video data 501. However, it is not limited thereto. In an embodiment, the events 701 and 703 may be events generated by an input of the user while playing the videos 410, 420, and 430.

In the operation 1220, in a case that the events 701 and 703 are detected, the electronic device 201 may perform operation 1230. In the operation 1220, in a case that the events 701 and 703 are not detected, the electronic device 201 may perform the operation 1220 again.

In the operation 1230, the electronic device 205 may determine whether a change of the source camera is required. In an embodiment, the electronic device 205 may determine whether a change of the source camera is required by the at least one event 701 and/or 703.

In an embodiment, the electronic device 205 may change a source video of a playback image displayed through the display 265 according to magnification according to zoom-in by the event 701.

For example, in a case that the magnification according to the zoom-in by the event 701 is within a reference magnification range (e.g., more than 0.8 times and less than 3 times), the electronic device 205 may not change the source video of the playback image displayed through the display 265 from the video 410 obtained by a first camera 281. For example, in a case that the magnification according to the zoom-in by the event 701 is out of the reference magnification range (e.g., 3 times or more), the electronic device 205 may change the source video of the playback image displayed through the display 265 from the video 410 obtained by the first camera 281 to the video 420 obtained by the second camera 283.

In the operation 1230, in a case that a change of the source camera is required, the electronic device 201 may perform operation 1240. In operation 1230, in a case that the change of the source camera is not required, the electronic device 201 may perform operation 1250 again.

In operation 1240, the electronic device 205 may display a frame obtained from the same source camera as a previously displayed frame on the display 265.

In a case that the magnification according to the zoom-in by the event 701 is within the reference magnification range (e.g., more than 0.8 times and less than 3 times), the electronic device 205 may display an image enlarged from the frame obtained from the same source camera as the previously displayed frame through the display 265. In a case that the magnification according to the zoom-out by the event 703 is within the reference magnification range (e.g., more than 0.8 times and less than 3 times), the electronic device 205 may display an image reduced from the frame obtained from the same source camera as the previously displayed frame on the display 265.

In the operation 1250, the electronic device 205 may display a frame obtained from a different source camera than a previously displayed frame on the display 265.

In a case that the magnification according to the zoom-in by the event 701 exceeds the reference magnification range (e.g., 3 times or more), the electronic device 205 may display an image based on the frame obtained from the different source camera than the previously displayed frame on the display 265. In a case that the magnification according to the zoom-out by the event 703 is out of the reference magnification range (e.g., 0.8 times or less), the electronic device 205 may display an image based on the frame obtained from the different source camera different than the previously displayed frame on the display 265.

An electronic device 201 as described above may include a processor 221. The electronic device 201 may include memory 231 storing instructions. The instructions, when executed by the processor 221, may cause the electronic device 201 to obtain, via a first camera 281, a first video 410 including first frames 411, 413, 415, 417, and 419. The instructions, when executed by the processor 221, may cause the electronic device 201 to obtain, via a second camera 283, a second video 420 including second frames 421, 423, 425, 427, and 429. The instructions, when executed by the processor 221, may cause the electronic device 201 to generate video data 501 including the first video 410 and the second video 420 on a single video track.

In an embodiment, each frame 411 of the first frames 411, 413, 415, 417, and 419 and each frame 421 of the second frames 421, 423, 425, 427, and 429 having a corresponding timestamp may have a same timestamp number.

In an embodiment, each frame 411 of the first frames 411, 413, 415, 417, and 419 and each frame 421 of the second frames 421, 423, 425, 427, and 429 having a corresponding timestamp may have a same timestamp number, which is stored as metadata.

In an embodiment, the metadata 521 of the first frames 411, 413, 415, 417, and 419 may be included in a metadata area 511 of the video data 501. In an embodiment, the metadata 525 of the second frames 421, 423, 425, 427, and 429 may be included in a user data area 515 different from the metadata area.

In an embodiment, the metadata 525 of the second frames 421, 423, 425, 427, and 429 may include an offset indicating a correction value of a timestamp difference between each frame of the first frames and each frame of the second frames having the same timestamp number.

In an embodiment, the metadata of the second frames 421, 423, 425, 427, and 429 may indicate at least one first frame of the first frames 411, 413, 415, 417, and 419 as a reference frame for decoding at least one frame of the second frames 421, 423, 425, 427, and 429.

The electronic device 201 may further include a display 261. The instructions may be configured, when executed by the processor 221, to cause the electronic device 201 to, while obtaining the video data including the first video 410 and the second video 420 on the single video track, detect an event for changing a source video of a preview image displayed through the display 261 from the first frames 411, 413, 415, 417, and 419 to the second frames 421, 423, 425, 427, and 429. The instructions may be configured, when executed by the processor 221, to cause the electronic device 201 to generate the video data 501 including information for changing a playback video from the first frames 411, 413, 415, 417, and 419 to the second frames 421, 423, 425, 427, and 429 at a timestamp number corresponding to a timestamp when the event is detected, when the video is played through the video data 501.

In an embodiment, a second frame which is indicated by the timestamp number for changing the playback video and included in the second frames 421, 423, 425, 427, and 429 may be captured earlier than another second frame when the event is detected.

The instructions may be configured, when executed by the processor 221, to cause the electronic device 201 to generate the video data 501 including the first video 410 without at least a part of the first frames 411, 413, 415, 417, and 419 that is captured after the event is detected and the second video 420 without at least a part of the second frames 421, 423, 425, 427, and 429 that is captured before the event is detected.

A non-transitory computer readable storage medium as described above may store a program including instructions. The instructions may be configured, when executed by a processor 221 of an electronic device 201, to cause the electronic device 201 to obtain, via a first camera 281, a first video 410 including first frames 411, 413, 415, 417, and 419. The instructions may be configured, when executed by the processor 221 of the electronic device 201, to cause the electronic device 201 to obtain, via a second camera 283, a second video 420 including second frames 421, 423, 425, 427, and 429. The instructions may be configured, when executed by the processor 221 of the electronic device 201, to cause the electronic device 201 to generate video data 501 including the first video 410 and the second video 420 on a single video track.

A method as described above may be performed by an electronic device 201. The method may include obtaining, via a first camera 281, a first video 410 including first frames 411, 413, 415, 417, and 419. The method may include obtaining, via a second camera 283, a second video 420 including second frames 421, 423, 425, 427, and 429. The method may include generating video data 501 including the first video 410 and the second video 420 on a single video track.

An electronic device 205 as described above may include a display 265. The electronic device 205 may include a processor 225. The electronic device 205 may include memory 235 storing instructions. The instructions, when executed by the processor 225, may cause the electronic device 205 to obtain video data 501 as a single video track 401 including a first video 410 and a second video 420 on the single video track. The instructions, when executed by the processor 225, may cause the electronic device 205 to play first frames 411, 413, 415, 417, and 419 of the first video 410 according to timestamp numbers. The instructions, when executed by the processor 225, may cause the electronic device 205 to, in a case that an input event E1 or E2 for changing from the first frames 411, 413, 415, 417, and 419 to second frames 421, 423, 425, 427, and 429 of the second video 420 are received during playing of the first frames 411, 413, 415, 417, and 419, play the second frames 421, 423, 425, 427, and 429 according to the timestamp numbers.

In an embodiment, each frame 411 of the first frames 411, 413, 415, 417, and 419 and each frame 421 of the second frames 421, 423, 425, 427, and 429 having a corresponding timestamp may have a same timestamp number.

In an embodiment, each frame 411 of the first frames 411, 413, 415, 417, and 419 and each frame 421 of the second frames 421, 423, 425, 427, and 429 having a corresponding timestamp may have a same timestamp number, which is stored as metadata.

In an embodiment, the metadata 521 of the first frames 411, 413, 415, 417, and 419 may be included in a metadata area 511 of the video data 501 including the video of the single video track 401. In an embodiment, the metadata 525 of the second frames 421, 423, 425, 427, and 429 may be included in a user data area 515 different from the metadata area.

In an embodiment, the metadata 525 of the second frames 421, 423, 425, 427, and 429 may include an offset indicating a correction value of a timestamp difference between each frame of the first frames and each frame of the second frames having the same timestamp number. The instructions may be configured, when executed by the processor 225, to cause the electronic device 205 to play the second frames 421, 423, 425, 427, and 429 at timestamps adjusted based on the offset.

In an embodiment, the metadata of the second frames 421, 423, 425, 427, and 429, which are a reference frame of at least one frame of the second frames 421, 423, 425, 427, and 429, may indicate at least one first frame of the first frames 411, 413, 415, 417, and 419 as a reference frame for decoding at least one frame of the second frames 421, 423, 425, 427, and 429.

The instructions may be configured, when executed by the processor 225, to cause the electronic device 205 to, in response to that the input event E1 or E2 is for zooming out a first frame of the first frames 411, 413, 415, 417, and 419 played through the display 265, identify whether an angle of view of a camera capturing the second frames 421, 423, 425, 427, and 429 corresponds to an angle of view of the zoomed-out first frame. The instructions may be configured, when executed by the processor 225, to cause the electronic device 205 to, in response to identifying that the angle of view of the camera corresponds to the angle of view of the zoomed-out first frame, play the second frames 421, 423, 425, 427, and 429 according to the timestamp numbers. The instructions may be configured, when executed by the processor 225, to cause the electronic device 205 to, in response to identifying that the angle of view of the camera does not correspond to the angle of view of the zoomed-out first frame, play the first frames 411, 413, 415, 417, and 419 by zooming out according to the timestamp numbers.

The instructions may be configured, when executed by the processor 225, to cause the electronic device 205 to, in response to that the input event E1 or E2 is for zooming in a first frame of the first frames 411, 413, 415, 417, and 419 played through the display 265, identify whether an angle of view of a camera capturing the second frames 421, 423, 425, 427, and 429 corresponds to an angle of view of the zoomed-in first frame. The instructions may be configured, when executed by the processor 225, to cause the electronic device 205 to, in response to identifying that the angle of view of the camera corresponds to the angle of view of the zoomed-in first frame, play the second frames 421, 423, 425, 427, and 429 according to the timestamp numbers. The instructions may be configured, when executed by the processor 225, to cause the electronic device 205 to, in response to identifying that the angle of view of the camera does not correspond to the angle of view of the zoomed-in first frame, play the first frames 411, 413, 415, 417, and 419 by zooming in according to the timestamp numbers.

A non-transitory computer readable storage medium as described above, may store a program including instructions. The instructions may be configured, when executed by a processor 225 of an electronic device 205 including a display 265, to cause the electronic device 205 to obtain video data 501 as a single video track 401 including a first video 410 and a second video 420 on the single video track. The instructions may be configured, when executed by the processor 225, to cause the electronic device 205 to play first frames 411, 413, 415, 417, and 419 of the first video 410 according to timestamp numbers. The instructions may be configured, when executed by the processor 225, to cause the electronic device 205 to, in a case that an input event E1 or E2 for changing from the first frames 411, 413, 415, 417, and 419 to second frames 421, 423, 425, 427, and 429 of the second video 420 is received during playing of the first frames 411, 413, 415, 417, and 419, play the second frames 421, 423, 425, 427, and 429 according to the timestamp numbers.

The method as described above may be performed by an electronic device 205 including a display 265. The method may include obtaining video data 501 as a single video track 401 including a first video 410 and a second video 420 on the single video track. The method may include playing first frames 411, 413, 415, 417, and 419 of the first video 410 according to timestamp numbers. The method may include, in a case that an input event E1 and E2 for changing from the first frames 411, 413, 415, 417, and 419 to second frames 421, 423, 425, 427, and 429 of the second video 420 is received during playing of the first frames 411, 413, 415, 417, and 419, playing the second frames 421, 423, 425, 427, and 429 according to the timestamp numbers.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (201), comprising:
a processor (221); and
memory (231) storing instructions that, when executed by the processor (221), cause the electronic device (201) to:
obtain, via a first camera (281), a first video (410) including first frames (411, 413, 415, 417, 419),
obtain, via a second camera (283), a second video (420) including second frames (421, 423, 425, 427, 429), and
generate video data (501) including the first video (410) and the second video (420) on a single video track.

2. The electronic device (201) of claim 1,
wherein each frame of the first frames (411, 413, 415, 417, 419) and each frame of the second frames (421, 423, 425, 427, 429) having a corresponding timestamp (421) have a same timestamp number.

3. The electronic device (201) of claims 1 to 2,
wherein each frame of the first frames (411, 413, 415, 417, 419) and each frame of the second frames (421, 423, 425, 427, 429) having a corresponding timestamp (421) have a same timestamp number, which is stored as metadata.

4. The electronic device (201) of claims 1 to 3,
wherein the metadata of the first frames (411, 413, 415, 417, 419) is included in a metadata area of the video data (501), and
wherein the metadata of the second frames (421, 423, 425, 427, 429) is included in a user data area (515) different from the metadata area.

5. The electronic device (201) of claims 1 to 4,
wherein the metadata of the second frames (421, 423, 425, 427, 429) includes an offset indicating a correction value of a timestamp difference between each frame of the first frames (411, 413, 415, 417, 419) and each frame of the second frames (421, 423, 425, 427, 429) having the same timestamp number.

6. The electronic device (201) of claims 1 to 5,
wherein the metadata of the second frames (421, 423, 425, 427, 429) indicates at least one first frame of the first frames (411, 413, 415, 417, 419) as a reference frame for decoding at least one frame of the second frames (421, 423, 425, 427, 429).

7. The electronic device (201) of claims 1 to 6, further comprising:
a display (261),
wherein the instructions are configured, when executed by the processor (221), to cause the electronic device (201) to:
while obtaining the video data (501) including the first video (410) and the second video (420) on the single video track, detect an event for changing a source video of a preview image display (261)ed through the display (261) from the first frames (411, 413, 415, 417, 419) to the second frames (421, 423, 425, 427, 429), and
generate the video data (501) including information for changing a playback video from the first frames (411, 413, 415, 417, 419) to the second frames (421, 423, 425, 427, 429) at a timestamp number corresponding to a timestamp when the event is detected, when the video is played through the video data (501).

8. The electronic device (201) of claims 1 to 7,
wherein a second frame which is indicated by the timestamp number for changing the playback video and included in the second frames (421, 423, 425, 427, 429) is captured earlier than another second frame when the event is detected.

9. The electronic device (201) of claims 1 to 8,
wherein the instructions are configured, when executed by the processor (221), to cause the electronic device (201) to:
generate the video data (501) including the first video (410) without at least a part of the first frames (411, 413, 415, 417, 419) that is captured after the event is detected and the second video (420) without at least a part of the second frames (421, 423, 425, 427, 429) that is captured before the event is detected.

10. An electronic device (205), comprising:
a display (265),
a processor (225), and
memory (235) storing instructions, wherein the instructions, when executed by the processor (225), cause the electronic device (205) to:
obtain video data (501) as a single video track including a first video (410) and a second video (420) on the single video track,
play first frames (411, 413, 415, 417, 419) of the first video (410) according to timestamp numbers, and
in a case that an input event (E1, E2) for changing from the first frames (411, 413, 415, 417, 419) to second frames (421, 423, 425, 427, 429) of the second video (420) is received during playing of the first frames (411, 413, 415, 417, 419), play the second frames (421, 423, 425, 427, 429) according to the timestamp numbers.

11. The electronic device (205) of claim 10,
wherein each frame of the first frames (411, 413, 415, 417, 419) and each frame of the second frames (421, 423, 425, 427, 429) having a corresponding timestamp (421) have a same timestamp number.

12. The electronic device (205) of claims 10 to 11,
wherein each frame of the first frames (411, 413, 415, 417, 419) and each frame of the second frames (421, 423, 425, 427, 429) having a corresponding timestamp (421) have a same timestamp number, which is stored as metadata.

13. The electronic device (205) of claims 10 to 12,
wherein the metadata of the first frames (411, 413, 415, 417, 419) is included in a metadata area of the video data (501) including the video of the single video track, and
wherein the metadata of the second frames (421, 423, 425, 427, 429) is included in a user data area (515) different from the metadata area.

14. A non-transitory computer readable storage medium, storing
a program including instructions,
wherein the instructions are configured, when executed by a processor (221) of an electronic device (201), to cause the electronic device (201) to:
obtain, via a first camera (281), a first video (410) including first frames (411, 413, 415, 417, 419),
obtain, via a second camera (283), a second video (420) including second frames (421, 423, 425, 427, 429), and
generate video data (501) including the first video (410) and the second video (420) on a single video track.

15. A non-transitory computer readable storage medium, storing
a program including instructions,
wherein the instructions are configured, when executed by a processor (225) of an electronic device (205) comprising a display (265), to cause the electronic device (205) to:
obtain video data (501) as a single video track including a first video (410) and a second video (420) on the single video track,
play first frames (411, 413, 415, 417, 419) of the first video (410) according to timestamp numbers, and
in a case that an input event (E1, E2) for changing from the first frames (411, 413, 415, 417, 419) to second frames (421, 423, 425, 427, 429) of the second video (420) is received during playing of the first frames (411, 413, 415, 417, 419), play the second frames (421, 423, 425, 427, 429) according to the timestamp numbers.
